(19) Europäisches Patentamt / European Patent Office / Office européen des brevets

(11) **EP 3 098 264 B1**

(12) **EUROPEAN PATENT SPECIFICATION**

(45) Date of publication and mention of the grant of the patent:
**20.12.2017 Bulletin 2017/51**

(21) Application number: **15740534.1**

(22) Date of filing: **22.01.2015**

(51) Int Cl.:
*C08L 53/02* (2006.01)      *C08F 8/04* (2006.01)
*C09J 11/06* (2006.01)      *C09J 11/08* (2006.01)
*C09J 107/00* (2006.01)      *C09J 109/00* (2006.01)
*C09J 125/00* (2006.01)      *C09J 153/02* (2006.01)

(86) International application number:
**PCT/JP2015/051735**

(87) International publication number:
**WO 2015/111675 (30.07.2015 Gazette 2015/30)**

(54) **BLOCK COPOLYMER AND ADHESIVE COMPOSITION**

BLOCKCOPOLYMER UND KLEBSTOFFZUSAMMENSETZUNG

COPOLYMÈRE SÉQUENCÉ ET COMPOSITION ADHÉSIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **23.01.2014   JP 2014010803**

(43) Date of publication of application:
**30.11.2016   Bulletin 2016/48**

(73) Proprietors:
• **ASAHI KASEI KABUSHIKI KAISHA**
  **Tokyo 101-8101 (JP)**
• **Japan Elastomer Co., Ltd.**
  **Tokyo 101-8101 (JP)**

(72) Inventors:
• **NAKATANI, Kosuke**
  **Tokyo 101-8101 (JP)**

• **ARAKI, Yoshifumi**
  **Tokyo 101-8101 (JP)**
• **SHIBUYA, Kenta**
  **Tokyo 101-8101 (JP)**
• **HISASUE, Takahiro**
  **Tokyo 101-8101 (JP)**
• **MORITOU, Kazuo**
  **Tokyo 101-8101 (JP)**

(74) Representative: **Strehl Schübel-Hopf & Partner**
**Maximilianstrasse 54**
**80538 München (DE)**

(56) References cited:
**JP-A- 2009 114 308     JP-A- 2009 114 309**

**Description**

Technical Field

The present invention relates to a block copolymer and an adhesive composition using the same.

Background Art

In recent years, from the viewpoints of energy saving, resource saving, environmental load reduction and the like, there have been broadly utilized hot melt viscous adhesives; and as base polymers for the hot melt viscous adhesives, there are broadly used vinyl aromatic monomer-conjugated diene monomer-based block copolymers (for example, SBS; styrene-butadiene-styrene block copolymers and the like). Adhesive compositions obtained by using these block copolymers, however, are insufficient in the balance among retentivity, tack and tack strength, and these have been desired to be improved.

As their improving methods, for example, Patent Literature 1 discloses an adhesive composition composed of a triblock copolymer and a diblock copolymer. Further, Patent Literature 2 discloses an adhesive composition composed of a block copolymer obtained by coupling with a specific bifunctional coupling agent (specific dihalogen compound).

Further, Patent Literature 3 discloses an adhesive composition composed of a block copolymer obtained by hydrogenating, in a specific proportion, a block copolymer of a vinyl aromatic monomer and a conjugated diene monomer.

Citation List

Patent Literature

Patent Literature 1: Japanese Patent Laid-Open No. S61-278578
Patent Literature 2: Japanese Patent Laid-Open No. S63-248817
Patent Literature 3: Japanese Patent Laid-Open No. H05-98130

Summary of Invention

Technical Problem

Also in technologies conventionally proposed as described above, however, the effect of improving retentivity, tack and tack strength is still insufficient, and the balance among the adhesive property, the low-viscosity property, and the contamination property to adherends is also insufficient.

The present invention has been achieved in consideration of the above-mentioned problem, and has an object to provide a block copolymer composition to become an adhesive composition having excellent tack strength, tack and retentivity, and being excellent in the balance among the adhesive property, the low-viscosity property, and the contamination property to adherends, and an adhesive composition comprising the block copolymer composition.

Solution to Problem

As a result of exhaustive studies to solve the above conventional problematic points, the present inventors have found that an adhesive composition comprising a hydrogenated block copolymer composition having a specific structure and a tackifier in respective predetermined amounts can solve the above-mentioned conventional technical problems, and this finding has led to the completion of the present invention.

That is, the present invention is as follows.

[1] A block copolymer composition, comprising 20% by mass or more and 90% by mass or less of a component (A) and 10% by mass or more and 80% by mass or less of a component (B),
wherein the component (A) is a block copolymer having a polymer block (Ar) mainly comprising a vinyl aromatic monomer unit and a polymer block (D) mainly comprising a conjugated diene monomer unit, and having a weight-average molecular weight of 30,000 or higher and 190,000 or lower; and
the component (B) is a block copolymer having a polymer block (Ar) mainly comprising a vinyl aromatic monomer unit and a polymer block (D) mainly comprising a conjugated diene monomer unit, and having a weight-average molecular weight of 60,000 or higher and 500,000 or lower,

wherein a hydrogenation ratio of the conjugated diene monomer units in the component (A) and the component (B) is 10 to 80% by mol based on a total amount of the conjugated diene monomer units in the component (A) and the component (B); and

a ratio of a weight-average molecular weight of the component (B) to a weight-average molecular weight of the component (A) is 1.3 to 10; and

wherein the content of the vinyl aromatic monomer units is 5% by mass or higher and lower than 35% by mass based on 100% by mass of the component (A) and the component (B).

[2] The block copolymer composition according to the above [1], wherein a vinyl bond content of the conjugated diene monomer units in the component (A) and the component (B) before hydrogenation is 5% by mol or larger and smaller than 30% by mol based on the total amount of the conjugated diene monomer units in the component (A) and the component (B).

[3] The block copolymer composition according to the above [1] or [2], wherein the component (B) comprises the block copolymer having at least two of the polymer block (Ar) and at least one of the polymer block (D).

[4] The block copolymer composition according to any one of the above [1] to [3], wherein the weight-average molecular weight of the component (B) is 100,000 or higher and 500,000 or lower.

[5] The block copolymer composition according to any one of the above [1] to [4], wherein the component (B) comprises a block copolymer(s) represented by formulae Ar-D-Ar, $(Ar-D)_2X$, D-Ar-D-Ar and/or $(D-Ar-D)_2X$ (wherein X represents a residue of a coupling agent or a residue of a polymerization initiator).

[6] The block copolymer composition according to any one of the above [1] to [4], wherein the component (B) comprises a three-branched block copolymer(s) represented by formulae $(D-Ar-D)_3-X$ and/or $(Ar-D)_3-X$ (wherein X represents a residue of a coupling agent or a residue of a polymerization initiator).

[7] The block copolymer composition according to any one of the above [1] to [4], wherein the component (B) comprises a four-branched block copolymer(s) represented by formulae $(D-Ar-D)_4-X$ and/or $(Ar-D)_4-X$ (wherein X represents a residue of a coupling agent or a residue of a polymerization initiator).

[8] The block copolymer composition according to any one of the above [5] to [7], wherein the coupling agent comprises a halogen-free coupling agent.

[9] The block copolymer composition according to any one of the above [1] to [8], wherein the content of the vinyl aromatic monomer units is 5% by mass or higher and lower than 30% by mass based on 100% by mass of the component (A) and the component (B).

[10] The block copolymer composition according to any one of the above [1] to [9], wherein the content of the vinyl aromatic monomer units is 5% by mass or higher and lower than 20% by mass based on 100% by mass of the component (A) and the component (B). [11]

An adhesive composition, comprising:

    100 parts by mass of a block copolymer composition according to any one of the above [1] to [10];
    1 to 600 parts by mass of a tackifier; and
    0 to 200 parts by mass of a softening agent.

[12] The adhesive composition according to the above [11], wherein the content of the tackifier is 50 to 400 parts by mass.

[13] The adhesive composition according to the above [11] or [12], further comprising a vinyl aromatic elastomer.

[14] The adhesive composition according to any one of the above [11] to [13], further comprising a conjugated diene rubber.

[15] The adhesive composition according to any one of the above [11] to [14], further comprising a natural rubber.

Advantageous Effects of Invention

The present invention can provide a block copolymer composition to become an adhesive composition having excellent tack strength, tack and retentivity, being excellent in the viscous adhesion property and the low-viscosity property, and being low in the contamination property to adherends, and an adhesive composition comprising the block copolymer composition.

Description of Embodiment

Hereinafter, an embodiment (hereinafter, referred to as "the present embodiment") of the present invention will be described in detail. The present invention is not limited to the following embodiment, and various changes and modifications may be made within the scope of its gist.

In the below, a constituent unit constituting a polymer is referred to as "... monomer unit"; and in the case where the constituent unit is described as a material of the polymer, the "unit" is omitted and the constituent unit is described simply as "... monomer".

[Block copolymer composition]

A block copolymer composition according to the present embodiment comprises:

20% by mass or more and 90% by mass or less of a component (A) and 10% by mass or more and 80% by mass or less of a component (B),
wherein the component (A) is a block copolymer having a polymer block (Ar) (hereinafter, represented by "Ar" in some cases) mainly comprising a vinyl aromatic monomer unit and a polymer block (D) (hereinafter, represented by "D" in some cases) mainly comprising a conjugated diene monomer unit, and having a weight-average molecular weight of 30,000 or higher and 190,000 or lower; and
the component (B) is a block copolymer having a polymer block (Ar) mainly comprising a vinyl aromatic monomer unit and a polymer block (D) mainly comprising a conjugated diene monomer unit, and having a weight-average molecular weight of 60,000 or higher and 500,000 or lower,
wherein a hydrogenation ratio of the conjugated diene monomer units in the component (A) and the component (B) is 10 to 80% by mol to a total amount of the conjugated diene monomer units in the component (A) and the component (B); and
a ratio of a weight-average molecular weight of the component (B) to a weight-average molecular weight of the component (A) is 1.3 to 10; and the content of the vinyl aromatic monomer units is 5% by mass or higher and lower than 35% by mass based on 100% by mass of the component (a) and the component (B).

In the case where a plurality of each of polymer blocks (Ar) and/or polymer blocks (D) is present in a block copolymer of the component (A) and/or the component (B), the weight-average molecular weights, compositions and structures of the polymer blocks (Ar) and the polymer blocks (D) may be identical or different.
In the present description, the term "mainly comprising a vinyl aromatic monomer unit" means that the content of the vinyl aromatic monomer unit is 60% by mass or higher, preferably 80% by mass or higher, more preferably 90% by mass or higher, and still more preferably 95% by mass or higher, based on 100% by mass of the polymer block (Ar).
Further, in the present description, the term "mainly comprising a conjugated diene monomer unit" means that the content of the conjugated diene monomer unit is 60% by mass or higher, preferably 80% by mass or higher, more preferably 90% by mass or higher, and still more preferably 95% by mass or higher, based on 100% by mass of the polymer block (D).
With respect to the contents of the component (A) and the component (B), the contents of the component (A) is 20% by mass or higher and 90% by mass or lower, and the contents of the component (B) is 10% by mass or higher and 80% by mass or lower; preferably, the contents of the component (A) is 30% by mass or higher and 80% by mass or lower, and the contents of the component (B) is 20% by mass or higher and 70% by mass or lower; and more preferably, the contents of the component (A) is 40% by mass or higher and 70% by mass or lower, and the contents of the component (B) is 30% by mass or higher and 60% by mass or lower, based on the total amount of the component (A) and the component (B). When the contents of the component (A) and the component (B) are in the above ranges, a block copolymer composition and an adhesive composition excellent in both the low-melt viscosity property and the adhesive property are obtained. Particularly when the content of the component (A) is 20% by mass or higher, a block copolymer composition and an adhesive composition having excellent tack, tack strength and low-melt viscosity property is likely to be obtained.
The ratio of a weight-average molecular weight of the component (B) to a weight-average molecular weight of the component (A) (a weight-average molecular weight of the component (B)/a weight-average molecular weight of the component (A)) is 1.3 or higher and 10 or lower, preferably 1.4 or higher and 8.0 or lower, more preferably 1.5 or higher and 6.0 or lower, and still more preferably 1.6 or higher and 5.0 or lower. When the ratio of a weight-average molecular weight of the component (B) to a weight-average molecular weight of the component (A) is in the above range, a block copolymer composition and an adhesive composition being excellent in the low-viscosity property and the adhesive property and being low in the contamination property to adherends is obtained. Particularly when the ratio of a weight-average molecular weight of the component (B) to a weight-average molecular weight of the component (A) (a weight-average molecular weight of the component (B)/a weight-average molecular weight of the component (A)) is 10 or lower, a block copolymer composition and an adhesive composition excellent in the low-melt viscosity property is likely to be obtained. Further, when the ratio of a weight-average molecular weight of the component (B) to a weight-average molecular weight of the component (A) (a weight-average molecular weight of the component (B)/a weight-average molecular weight of the component (A)) is 1.3 or higher, a block copolymer composition and an adhesive composition low in the contamination property to adherends is likely to be obtained. The contents, the weight-average molecular weights, and the ratio of the weight-average molecular weights of the component (A) and the component (B) can be controlled in the above ranges by regulating various conditions of a production method described later. Further, the contents, the weight-average molecular weights, and the ratio of the weight-average molecular weights of the component (A) and the component (B) can be measured by methods to be described in Examples described later. Hereinafter, the each component will be described in detail.

[Block copolymers]

(Component (A))

The component (A) is a block copolymer having a polymer block (Ar) mainly comprising a vinyl aromatic monomer unit, and a polymer block (D) mainly comprising a conjugated diene monomer unit, and having a weight-average molecular weight of 30,000 or higher and 190,000 or lower, and is contained in 20% by mass or more and 90% by mass or less in the block copolymer composition.

The weight-average molecular weight of the block copolymer of the component (A) is 30,000 or higher, preferably 45,000 or higher, and more preferably 70,000 or higher. Further, the weight-average molecular weight of the block copolymer of the component (A) is 190,000 or lower, preferably 175,000 or lower, and more preferably 160,000 or lower. When the weight-average molecular weight of the component (A) is in the above range, a block copolymer composition and an adhesive composition having excellent tack strength, tack and retentivity are likely to be obtained. Further, the weight-average molecular weight of the component (A) is 30,000 or higher and 190,000 or lower, preferably 45,000 or higher and 175,000 or lower, and more preferably 70,000 or higher and 160,000 or lower. When the weight-average molecular weight of the component (A) is in the above range, a block copolymer composition and an adhesive composition having excellent tack strength, tack and retentivity are obtained. Here, the weight-average molecular weight of the component (A) can be determined by a method to be described in Examples.

The structure of the component (A) is not especially limited, but examples thereof include the following formulae (i) to (vi).

(Ar-D)n                    (i)

D-(Ar-D)n                  (ii)

Ar-(D-Ar)n                 (iii)

Ar-(D-Ar)n-X               (iv)

[(Ar-D)k]m-X               (v)

[(Ar-D)k-Ar]m-X            (vi)

wherein in the above formulae (i) to (vi), Ar represents a polymer block (Ar) mainly comprising a vinyl aromatic monomer unit; D represents a polymer block (D) mainly comprising a conjugated diene monomer unit; X represents a residue of a coupling agent or a residue of a polymerization initiator such as a polyfunctional organolithium; and m, n and k each represent an integer of 1 or more, preferably an integer of 1 to 6.

Among the above formulae (i) to (vi), preferable is a block copolymer having at least one polymer block (Ar) and at least one polymer block (D); preferable is a block copolymer represented by, for example, Ar-D, Ar-D-X, D-Ar-X or D-Ar-D; and more preferable is a block copolymer having one polymer block (Ar) and one polymer block (D). When the component (A) has such a structure, a block copolymer composition and an adhesive composition having excellent low-melt viscosity property, tack strength and tack are likely to be obtained.

(Component (B))

The component (B) is a block copolymer having a polymer block (Ar) mainly comprising a vinyl aromatic monomer unit, and a polymer block (D) mainly comprising a conjugated diene monomer unit, and having a weight-average molecular weight of 60,000 or higher and 500,000 or lower, and is contained in 10% by mass or more and 80% by mass or less in the block copolymer composition.

The weight-average molecular weight of the block copolymer of the component (B) is 60,000 or higher, preferably 100,000 or higher, and more preferably 120,000 or higher. Further, the weight-average molecular weight of the block copolymer of the component (B) is 500,000 or lower, preferably 475,000 or lower, and more preferably 450,000 or lower. When the weight-average molecular weight of the component (B) is in the above range, a block copolymer composition and an adhesive composition having excellent tack strength, tack and retentivity are likely to be obtained. Further, the weight-average molecular weight of the component (B) is 60,000 or higher and 500,000 or lower, preferably 100,000 or higher and 500,000 or lower, more preferably 150,000 or higher and 450,000 or lower, and still more preferably 200,000 or higher and 400,000 or lower. When the weight-average molecular weight of the component (B) is in the above range, there are obtained a block copolymer composition and an adhesive composition excellent in the tack strength, tack and retentivity, and being low in the contamination property to adherends. Particularly when the weight-average molecular weight of the component (B) is 60,000 or higher, there are obtained a block copolymer composition and an adhesive composition excellent in retentivity, and when the weight-average molecular weight of the component (B) is 500,000 or lower, there are obtained a block copolymer composition and an adhesive composition excellent in the tack strength and the low-melt viscosity property. Here, the weight-average molecular weight of the component (B) can be determined by the method to be described in Examples.

Here, in the GPC measurement, in the case where peaks of the component (A) and the component (B) overlap each other partially, weight-average molecular weights thereof can be measured by a method to be described in Examples.

The structure of the component (B) is not especially limited, but examples thereof include the following formulae (vii) to (xiii).

$$(Ar-D)e \ ... \ (vii)$$

$$D-(Ar-D)e \ ... \ (viii)$$

$$Ar-(D-Ar)e \ ... \ (ix)$$

$$[Ar-(D-Ar)g]f-X \ ... \ (x)$$

$$[D-(Ar-D)g]f-X \ ... \ (xi)$$

$$[(Ar-D)g]f-X \ ... \ (xii)$$

$$[(Ar-D)g-Ar]f-X \ ... \ (xiii)$$

In the above formulae (vii) to (xiii), Ar represents a polymer block (Ar) mainly comprising a vinyl aromatic monomer unit; D represents a polymer block (D) mainly comprising a conjugated diene monomer unit; X represents a residue of a coupling agent or a residue of a polymerization initiator such as a polyfunctional organolithium; and e, f and g each represent an integer of 1 or more, preferably an integer of 1 to 6.

Among the above formulae (vii) to (xiii), preferable is a block copolymer containing at least two polymer blocks (Ar) and at least one polymer block (D). When the component (B) has such block copolymers, a block copolymer composition and an adhesive composition excellent in the balance of the adhesive property are likely to be obtained.

Further, the component (B) more preferably contains block copolymers represented by the formulae Ar-D-Ar, (Ar-D)$_2$X, D-Ar-D-Ar and/or (D-Ar-D)$_2$X. When the component (B) contains such block copolymers, a block copolymer composition and an adhesive composition excellent in the tack strength and excellent in the balance between the productivity and the adhesive property are likely to be obtained.

Further, the component (B) more preferably contains a block copolymer(s) represented by the formulae (D-Ar-D)$_3$-X and/or (Ar-D)$_3$-X. When the component (B) contains such block copolymers, a block copolymer composition and an adhesive composition excellent in the retentivity and excellent in the balance between the adhesive property and the low-melt viscosity property are likely to be obtained.

Further, the component (B) more preferably contains a block copolymer(s) represented by the formulae (D-Ar-D)$_4$-X and/or (Ar-D)$_4$-X. When the component (B) contains such block copolymers, a block copolymer composition and an adhesive composition excellent in the retentivity and excellent in the balance between the adhesive property and the low-melt viscosity property are likely to be obtained.

The content of a vinyl aromatic monomer unit in the block copolymer composition according to the present embodiment is 5% by mass or higher, preferably 8% by mass or higher, and more preferably 10% by mass or higher, based on 100% by mass of the component (A) and the component (B). Further, the content of the vinyl aromatic monomer unit in the block copolymer composition is lower than 35% by mass, preferably lower than 30% by mass, and more preferably lower than 20% by mass, based on 100% by mass of the component (A) and the component (B). More specifically, the content of the vinyl aromatic monomer unit in the block copolymer composition is 5% by mass or higher and lower than 35% by mass, preferably 5% by mass or higher and lower than 30% by mass, and more preferably 5% by mass or higher and lower than 20% by mass. When the content of the vinyl aromatic monomer unit in the block copolymer composition according to the present embodiment is in the above range, there are likely to be obtained a block copolymer composition and an adhesive composition having excellent adhesive performance. Particularly when the content of the vinyl aromatic monomer unit is 5% by mass or higher, a block copolymer composition and an adhesive composition having excellent tack strength and retentivity, and being low in the contamination property to adherends are likely to be obtained. Further, when the content of the vinyl aromatic monomer unit is lower than 35% by mass, a block copolymer composition and an adhesive composition having excellent tack are likely to be obtained.

Here, the content of a vinyl aromatic monomer unit in the block copolymer composition can be measured by a method to be described in Examples described later.

Further, the vinyl bond content of the conjugated diene monomer units in the component (A) and the component (B) before hydrogenation is preferably smaller than 30% by mol, more preferably smaller than 28% by mol, and still more preferably smaller than 25% by mol, based on the total amount of the conjugated diene monomer units in the component (A) and the component (B). Further, the vinyl bond content of the conjugated diene monomer units before hydrogenation is preferably 5% by mol or larger, more preferably 8% by mol or larger, still more preferably 10% by mol or larger, further still more preferably 12% by mol or larger, further still more preferably 13.5% by mol or larger, and further still more preferably 15% by mol or larger, based on the total amount of the conjugated diene monomer units in the component (A) and the component (B). More specifically, the vinyl bond content of the conjugated diene monomer units before hydrogenation is preferably 5% by mol or larger and smaller than 30% by mol, more preferably 8% by mol or larger and smaller than 28% by mol, and still more preferably 12% by mol or larger and smaller than 25% by mol, based on the total amount of the conjugated diene monomer units in the component (A) and the component (B). When the vinyl bond content of the conjugated diene monomer units is in the above range, it is likely that the productivity, the tack and the tack strength are further improved and the contamination property to adherends is more reduced. Particularly when the vinyl bond content is smaller than 30% by mol, a block copolymer composition and an adhesive composition being low in the contamination property to adherends are likely to be obtained; and when the vinyl bond content is 5% by mol or larger, a block copolymer composition and an adhesive composition excellent in the low-melt viscosity property are likely to be obtained.

Here, the "vinyl bond content" is a proportion of the total molar amount of conjugated diene monomer units incorporated in bonding forms of 1,2-bonding and 3,4-bonding in the component (A) and the component (B) to the total molar amount of conjugated diene monomer units incorporated in bonding forms of 1,2-bonding, 3,4-bonding and 1,4-bonding therein, before hydrogenation. The vinyl bond content of the conjugated diene monomer units before hydrogenation can be measured by a nuclear magnetic resonance spectral analysis (NMR), and specifically, can be measured by a method to be described in Examples described later.

Here, the proportion of the total molar amount of the conjugated diene monomer units incorporated in bonding forms of non-hydrogenated 1,2-bonding, hydrogenated 1,2-bonding, non-hydrogenated 3,4-bonding and hydrogenated 3,4-bonding to the total molar amount of the conjugated diene monomer units incorporated in bonding forms of non-hydrogenated 1,2-bonding, hydrogenated 1,2-bonding, non-hydrogenated 3,4-bonding, hydrogenated 3,4-bonding, non-hydrogenated 1,4-bonding and hydrogenated 1,4-bonding, after hydrogenation, is equal to the vinyl bond content of the conjugated diene monomer units. Therefore, the vinyl bond content of the conjugated diene monomer units can be measured by a nuclear magnetic resonance spectral analysis (NMR) by using the block copolymer composition after hydrogenation.

Here, since the values of the content of the vinyl aromatic monomer units, the weight-average molecular weights of the component (A) and the component (B), and the contents of the component (A) and the component (B) take nearly the same values before and after hydrogenation, the values after the hydrogenation can be employed.

In a hydrogenation step, conjugated bonds of the vinyl aromatic monomer units may be hydrogenated, and from the viewpoints of the retentivity and the adhesion, the hydrogenation ratio of the whole vinyl aromatic monomer units is preferably 30% by mol or lower, more preferably 10% by mol or lower, and still more preferably 3% by mol or lower.

Further, the hydrogenation ratio of the conjugated diene monomer units in the block copolymer composition according to the present embodiment is preferably 10% by mol or higher, more preferably 12% by mol or higher, still more preferably 15% by mol or higher, and further still more preferably 18% by mol or higher, based on the total amount of the conjugated diene monomer units in the component (A) and the component (B). Further, the hydrogenation ratio of the conjugated diene monomer units, in the block copolymer composition according to the present embodiment is preferably 80% by mol or lower, more preferably lower than 75% by mol, still more preferably 70% by mol or lower, and further still more preferably 65% by mol or lower, based on the total amount of the conjugated diene monomer units in the component (A) and the component (B). When the hydrogenation ratio of the conjugated diene monomer units is in the above range, a block copolymer composition and an adhesive composition high in the adhesive property and low in the contamination property to adherends are likely to be obtained. Particularly when the hydrogenation ratio is 10% by mol or higher, a block copolymer composition and an adhesive composition excellent in the retentivity, the tack strength, the tack and the low-melt viscosity property are likely to be obtained; and when he hydrogenation ratio is 80% by mol or lower, a block copolymer composition and an adhesive composition excellent in the retentivity, the tack strength, the tack and the low-melt viscosity property are likely to be obtained. When the hydrogenation ratio is 80% by mol or lower, the compatibility of the compositions with polymers having high SP values is likely to be good as compared with that of polybutadiene rubbers, styrene-butadiene rubbers, styrene-butadiene-based block copolymers, aromatic petroleum hydrocarbon resins, and aliphatic petroleum hydrocarbon resins such as C5/C9 copolymer-based resins.

Further, the hydrogenation ratio of the conjugated diene monomer units in the block copolymer composition according to the present embodiment is preferably 10% by mol or higher and 80% by mol or lower, more preferably 12% by mol or higher and lower than 60% by mol, still more preferably 15% by mol or higher and 55% by mol or lower, and further still more preferably 18% by mol or higher and 50% by mol or lower, based on the total amount of the conjugated diene monomer units in the component (A) and the component (B). When the hydrogenation ratio of the conjugated diene monomer units is in the above range, a block copolymer composition and an adhesive composition being excellent in the adhesive property and being low in the contamination property to adherends are likely to be obtained.

Further, from the viewpoint of providing a block copolymer composition and an adhesive composition excellent in the thermal stability, the hydrogenation ratio of the conjugated diene monomer units is preferably 60% by mol or higher and 80% by mol or lower, more preferably 63% by mol or higher and 77% by mol or lower, and still more preferably 65% by mol or higher and 75% by mol or lower, based on the total amount of the conjugated diene monomer units in the component (A) and the component (B).

The hydrogenation ratio of the conjugated diene monomer units in the block copolymer composition can be measured by a method to be described in Examples.

[Production method of the block copolymer composition]

The block copolymer composition can be produced by successively carrying out a polymerization step of polymerizing at least a conjugated diene monomer and a vinyl aromatic monomer, with an organolithium compound as a polymerization initiator in a hydrocarbon solvent to thereby obtain a polymer, a hydrogenation step of hydrogenating double bonds of the conjugated diene monomer unit of the obtained polymer, and a solvent removal step of removing the solvent of a solution containing the hydrogenated block copolymer. Here, a component (A) and a component (B) may be produced separately and mixed later, or may be produced simultaneously.

In the case where the component (A) and the component (B) are produced simultaneously, the weight-average molecular weights, the ratio of the weight-average molecular weights, and the contents of the component (A) and the component (B) can be regulated, for example, by controlling the kind and the addition amount of a coupling agent described later. Further, the weight-average molecular weights, the ratio of the weight-average molecular weights, and the contents of the component (A) and the component (B) can also be regulated by controlling the addition amount and the number of times of addition of a polymerization initiator described later and adding the polymerization initiator dividedly in a plurality of times. Further, the weight-average molecular weights, the ratio of the weight-average molecular weights, and the contents of the component (A) and the component (B) can also be regulated by controlling the addition amount of a deactivating agent described later and carrying out once a deactivation step, and further continuing the polymerization reaction.

(Polymerization step)

The polymerization step is a step of polymerizing at least a conjugated diene monomer and a vinyl aromatic monomer, with an organolithium compound as a polymerization initiator in a hydrocarbon solvent to thereby obtain a polymer.

<The hydrocarbon solvent>

As described above, in the polymerization step, a hydrocarbon solvent is used. The hydrocarbon solvent is not especially limited, but examples thereof include aliphatic hydrocarbons such as butane, pentane, hexane, isopentane, heptane and octane; alicyclic hydrocarbons such as cyclopentane, methylcyclopentane, cyclohexane, methylcyclohexane and ethylcyclohexane; aromatic hydrocarbons such as benzene, toluene, ethylbenzene and xylene. The hydrocarbon solvent may be used singly or as a mixture of two or more.

<The polymerization initiator>

In the polymerization step, as the polymerization initiator, at least an organolithium compound is used. The organolithium compound is not especially limited, but examples thereof include organic monolithium compounds, organic dilithium compounds and organic polylithium compounds, which have one or more lithium atoms bound in their molecules. More specifically, examples of the organolithium compounds include ethyllithium, n-propyllithium, isopropyllithium, n-butyllithium, sec-butyllithium, tert-butyllithium, hexamethylenedilithium, butadienyldilithium and isoprenyllithium. The polymerization initiator may be used singly or in combinations of two or more.

The polymerization initiator may be added to a reaction solution by being divided in a plurality of times. By doing so, there can be obtained at one time a composition containing a plurality of block copolymers different in weight-average molecular weight and structure.

<Monomers to be used for the polymerization>

The conjugated diene monomer is a diolefin having a pair of conjugated double bonds. The conjugated diene monomer is not especially limited, but examples thereof include 1,3-butadiene, 2-methyl-1,3-butadiene (isoprene), 2,3-dimethyl-1,3-butadiene, 1,3-pentadiene, 2-methyl-1,3-pentadiene and 1,3-hexadiene. Among these, 1,3-butadiene and isoprene are preferable. Further, from the viewpoint of the mechanical strength, 1,3-butadiene is more preferable. The conjugated diene monomer may be used singly or in combinations of two or more.

The vinyl aromatic monomer is not especially limited, but examples thereof include styrene, $\alpha$-methylstyrene, p-methylstyrene, divinylbenzene, 1,1-diphenylethylene, N,N-dimethyl-p-aminoethylstyrene and N,N-diethyl-p-aminoethylstyrene. Among these, from the viewpoint of the economic efficiency, styrene is preferable. The vinyl aromatic monomer may be used singly or in combinations of two or more.

The block copolymer may contain monomer units other than the vinyl aromatic monomer unit and the conjugated diene monomer unit; and in the polymerization step, in addition to the vinyl aromatic monomer and the conjugated diene monomer, other monomers copolymerizable with these monomers can be used.

In the polymerization step, for the purpose of the regulation of the polymerization speed, the control of the micro structure (the ratios of cis, trans and vinyl) of the polymerized conjugated diene monomer unit, the regulation of the reaction ratio of the conjugated diene monomer and the vinyl aromatic monomer, and the like, a predetermined polar compound and randomizing agent can be used.

The polar compound and the randomizing agent are not especially limited, but examples thereof include ethers such as tetrahydrofuran, diethylene glycol dimethyl ether and diethylene glycol dibutyl ether; amines such as triethylamine and tetramethylethylenediamine; thioethers, phosphines, phosphoramides, alkylbenzene sulfonate salts, and alkoxides of potassium or sodium.

<The coupling agent>

In the polymerization step, a coupling agent represented by X in the above formulae (iv) to (vi) and (x) to (xiii) may be added to a solution containing the vinyl aromatic-conjugated diene block copolymer having active terminals so that the functional group of the coupling agent is less than 1 mol equivalent to the active terminals.

The coupling agent to be added is not especially limited, but an optional bi- or more functional coupling agent can be used. The bifunctional coupling agent is not especially limited, but examples thereof include bifunctional halogenated silanes such as dichlorosilane, monomethyldichlorosilane and dimethyldichlorosilane; bifunctional alkoxysilanes such as diphenyldimethoxysilane, diphenyldiethoxysilane, dimethyldimethoxysilane and dimethyldiethoxysilane; bifunctional halogenated alkanes such as dichloroethane, dibromoethane, methylene chloride and dibromomethane; bifunctional halogenated tins such as tin dichloride, monomethyltin dichloride, dimethyltin dichloride, monoethyltin dichloride, diethyltin dichloride, monobutyltin dichloride and dibutyltin dichloride; and dibromobenzene, benzoic acid, CO, and 2-chloropropene.

The trifunctional coupling agent is not especially limited, but examples thereof include trifunctional halogenated alkanes such as trichloroethane and trichloropropane; trifunctional halogenated silanes such as methyltrichlorosilane and ethyltrichlorosilane; trifunctional alkoxysilanes such as methyltrimethoxysilane, phenyltrimethoxysilane and phenyltriethoxysilane; and the like.

The tetrafunctional coupling agent is not especially limited, but examples thereof include tetrafunctional halogenated alkanes such as carbon tetrachloride, carbon tetrabromide and tetrachloroethane; tetrafunctional halogenated silanes such as tetrachlorosilane and tetrabromosilane; tetrafunctional alkoxysilanes such as tetramethoxysilane and tetraethoxysilane; tetrafunctional halogenated tins such as tetrachlorotin and tetrabromotin; and the like.

The penta- or higher functional coupling agent is not especially limited, but examples thereof include 1,1,1,2,2-pentachloroethane, perchloroethane, pentachlorobenzene, perchlorobenzene, octabromodiphenyl ether and decabromodiphenyl ether. Besides, there can also be used epoxidized soybean oils, bi- to hexafunctional epoxy group-containing compounds, carboxylate esters, and polyvinyl compounds such as divinylbenzene. The coupling agent may be used singly or in combinations of two or more.

Among the above, from the viewpoints of the color tone, the productivity, and the low adverse influence on plants, halogen-free coupling agents are preferable. Further, the coupling agent is, from the viewpoints of the productivity and the low adverse influence on plants, preferably an epoxy group-containing compound or an alkoxysilane.

As described above, when the coupling agent is added to a solution containing the vinyl aromatic-conjugated diene block copolymer having active terminals so that the functional group of the coupling agent is less than 1 mol equivalent to the active terminals, in a part of block copolymers of the vinyl aromatic-conjugated diene block copolymer having active terminals, the active terminals are bound with each other through residues of the coupling agent. Then, the rest part of the vinyl aromatic-conjugated diene block copolymer having active terminals resultantly remains still in their unreacted state. In the reaction using such a coupling agent, by regulating the kind and the addition amount of the coupling agent, the coupling rate can be controlled.

A polymerization method to be carried out in the polymerization step in the production method of the polymer according to the present embodiment is not especially limited, and well-known methods can be applied; and examples of the methods include methods described in Japanese Patent Publication No. S36-19286, S43-17979, S46-32415, S49-36957, S48-2423, S48-4106 and S56-28925, Japanese Patent Laid-Open No. S59-166518 and S60-186577, and the like.

<The deactivating agent>

In the polymerization step, a deactivating agent may be added. The deactivating agent is not especially limited, but water, alcohols and the like are known. Among these, from the viewpoint of the deactivating efficiency, alcohols are preferable. The deactivating agent may be added at any timing in the polymerization step. When the deactivating agent to be added is in a smaller amount than 100% by mol of the active terminals, the conjugated diene monomer and/or the vinyl aromatic monomer may be further successively added after the addition of the deactivating agent. By doing so, there continues the polymerization reaction of the active terminals not having been deactivated with the conjugated diene monomer and/or the vinyl aromatic monomer, and a polymer solution containing polymers having different molecular weights can be obtained.

Further, in the deactivation step, the contents of the component (A) and the component (B) can be controlled by regulating the addition molar amount of the deactivating agent to the addition amount of the polymerization initiator. It is likely that the larger the molar amount of the deactivating agent to be added, the higher the content of the component (A) becomes; and the smaller the molar amount of the deactivating agent to be added, the lower the content of the component (B) becomes.

Further, by adding the conjugated diene monomer and/or the vinyl aromatic monomer after the addition of the deactivating agent, and continuing the polymerization reaction, there can be controlled the weight-average molecular weights of the component (A) and the component (B), and the ratio of the weight-average molecular weights. Specifically, it is likely that the larger the amount of the conjugated diene monomer and/or the vinyl aromatic monomer to be added after the addition of the deactivating agent, the higher the weight-average molecular weight of the component (B) becomes, and along therewith, also the higher the ratio of the weight-average molecular weights becomes.

(Hydrogenation step)

The hydrogenation step is a step of making the polymer obtained in the polymerization step to be a hydrogenated material by a hydrogenation reaction of double bonds at least in the conjugated diene monomer of the polymer. Specifically, by hydrogenating the polymer in an inactive solvent in the presence of a hydrogenation catalyst, a hydrogenated block copolymer solution can be obtained. At this time, the hydrogenation ratio of the block copolymer can be controlled by regulating the reaction temperature, the reaction time, the amount of hydrogen to be supplied, the amount of the catalyst, and the like.

The catalyst to be used in the hydrogenation reaction is not especially limited, but there are known, for example, supported type heterogeneous catalysts in which a metal such as Ni, Pt, Pd or Ru is supported on a carrier such as carbon, silica, almina or diatomaceous earth, so-called Ziegler catalysts in which an organic salt or an acetylacetone salt of Ni, Co, Fe, Cr or the like is used with a reducing agent such as an organoaluminum, so-called organic complex catalysts such as organometal compounds of Ru, Rh or the like, and homogeneous catalysts in which a titanocene compound is used with an organolithium, an organoaluminum, an organomagnesium or the like as a reducing agent. Among these, from the viewpoint of the economic efficiency, the coloring property of the polymer, or the adhesive strength, preferable are homogeneous catalysts in which a titanocene compound is used with an organolithium, an organoaluminum, an organomagnesium or the like as a reducing agent.

The hydrogenation reaction temperature is preferably 0 to 200°C, and more preferably 30 to 150°C. The pressure of hydrogen to be used in the hydrogenation reaction is preferably 0.1 to 15 MPa, more preferably 0.2 to 10 MPa, and still more preferably 0.3 to 5 MPa. Further, the hydrogenation reaction time is preferably 3 min to 10 hours, and more preferably 10 min to 5 hours. Here, the hydrogenation reaction may be any of a batch process, a continuous process, or a combination thereof.

A hydrogenation method is not especially limited, but examples thereof include methods described in Japanese Patent Publication No. S42-8704, S43-6636, S63-4841 and S63-5401.

The hydrogenation reaction is, though being not especially limited, preferably carried out after a step described later of deactivating the active terminals of the polymer, from the viewpoint of high hydrogenation activity.

(Solvent removal step)

The solvent removal step is a step of removing the solvent in the solution containing the polymer. A solvent removal method is not especially limited, but examples thereof include methods of removing the solvent by steam stripping or direct solvent removal.

The amount of the remaining solvent in the polymer obtained by the production method of the polymer is preferably 2% by mass or smaller, more preferably 0.5% by mass or smaller, still more preferably 0.2% by mass or smaller, further still more preferably 0.05% by mass or smaller, and especially preferably 0.01% by mass or smaller.

Further, from the viewpoints of the heat aging resistance and the suppression of gelation of the block copolymer composition according to the present embodiment, it is preferable that an antioxidant is added. The antioxidant is not especially limited, but examples thereof include phenolic antioxidants of radical scavengers, and phosphorus-based antioxidants and sulfur-based antioxidants of peroxide decomposing agents. Further, antioxidants having both the performances may be used. These may be used singly or in combinations of two or more. Among these, from the viewpoints of the heat aging resistance and the suppression of gelation of the polymer, the addition of at least a phenolic antioxidant is preferable.

Besides, from the viewpoints of the prevention of coloring of the polymer and the high mechanical strength thereof, there may be added a deashing step of removing metals in the polymer, and a neutralization step of regulating the pH of the polymer, for example, addition of an acid or addition of carbon dioxide gas.

The block copolymer composition according to the present embodiment to be produced as described above may contain so-called modified polymers in which polar group-containing functional groups containing atoms selected from nitrogen, oxygen, silicon, phosphorus, sulfur and tin are bound to the block copolymer, and modified block copolymers in which the block copolymer component is modified with a modifier such as maleic anhydride. Such modified copolymers are obtained by carrying out a well-known modification reaction on the component (A) and the component (B).

A method for imparting these functional groups is not especially limited, but examples thereof include methods of adding the functional groups to the polymer by using compounds having the functional groups as the initiator, the monomers, the coupling agent or a terminating agent.

The initiator having a functional group is preferably one containing a N group, and includes dioctylaminolithium, di-2-ethylhexylaminolithium, ethylbenzylaminolithium, (3-(dibutyamino)-propyl)lithium and piperidinolithium.

Further, the monomer having a functional group includes compounds in which the monomer to be used in the above-mentioned polymerization is made to have a hydroxide group, an acid anhydride group, an epoxy group, an amino group, an amide group, a silanol group or an alkoxysilane group. Among these, monomers having a N group(s) are preferable, and examples thereof include N,N-dimethylvinylbenzylamine, N,N-diethylvinylbenzylamine, N,N-dipropylvinylbenzylamine, N,N-dibutylvinylbenzylamine, N,N-diphenylvinylbenzylamine, 2-dimethylaminoethylstyrene, 2-diethylaminoethylstyrene, 2-bis(trimethylsilyl)aminoethylstyrene, 1-(4-N,N-dimethylaminophenyl)-1-phenylethylene, N,N-dimethyl-2-(4-vinylbenzyloxy)ethylamine, 4-(2-pyrrolidinoethyl)styrene, 4-(2-piperidinoethyl)styrene, 4-(2-hexamethyleneiminoethyl)styrene, 4-(2-morpholinoethyl)styrene, 4-(2-thiazinoethyl)styrene, 4-(2-N-methylpiperazinoethyl)styrene, 1-((4-vinylphenoxy)methyl)pyrrolidine and 1-(4-vinylbenzyloxymethyl)pyrrolidine.

Further, the coupling agent and the terminating agent having a functional group include, among the above coupling agents, compounds having a hydroxide group, an acid anhydride group, an epoxy group, an amino group, an amide group, a silanol group or an alkoxysilane group. Among these, coupling agents having a N group(s) and an O group(s) are preferable, and examples thereof include tetraglycidylmetaxylenediamine, tetraglycidyl-1,3-bisaminomethylcyclohexane, tetraglycidyl-p-phenylenediamine, tetraglycidyldiaminodiphenylmethane, diglycidylaniline, γ-caprolactone, γ-glycidoxyethyltrimethoxysilane, γ-glycidoxypropyltrimethoxysilane, γ-glycidoxypropyltriphenoxysilane, γ-glycidoxypropylmethyldimethoxysilane, γ-glycidoxypropyldiethylethoxysilane, 1,3-dimethyl-2-imidazolidinone, 1,3-diethyl-2-imidazolidinone, N,N'-dimethylpropylene urea and N-methylpyrrolidone.

[Adhesive composition]

The adhesive composition according to the present embodiment comprises 100 parts by mass of the above-mentioned block copolymer composition, 1 to 600 parts by mass of a tackifier, and 0 to 200 parts by mass of a softening agent. Such an adhesive composition according to the present embodiment becomes one having excellent tack strength, tack and retentivity, being excellent in the adhesive property and the low-viscosity property, and being low in the contamination property to adherends.

Here, in the case where there are added, other than the component (A) and the component (B) to be used in the present embodiment, a styrene-butadiene-based block copolymer, a styrene-isoprene-based block copolymer, a hydrogenated styrene-butadiene-based block copolymer, a hydrogenated styrene-isoprene-based block copolymer, a styrene-butadiene-isoprene-based block copolymer, a hydrogenated styrene-butadiene-isoprene-based block copolymer, and the like, the adhesive composition is made to comprise 1 to 600 parts by mass of a tackifier described later, and 0 to 200 parts by mass of a softening agent described later, based on 100 parts by mass of the total content of the block copolymers other than the present embodiment and the component (A) and the component (B) according to the present embodiment.

Here, according to applications, it is preferable that the weight-average molecular weights of the components (A) and (B) in the block copolymer composition are selected, and the blend amount of each component of the tackifier, the softening agent and the like is regulated.

(Tackifier)

The tackifier can be selected in a wide variety according to applications and required performance of the obtained adhesive composition. The tackifier is not especially limited, but there can be exemplified rosin-based compounds such as natural rosin, modified rosin, glycerol esters of natural rosin, glycerol esters of modified rosin, pentaerythritol esters of natural rosin, pentaerythritol esters of modified rosin, hydrogenated rosin and pentaerythritol esters of hydrogenated rosin; terpene-based compounds such as copolymers of natural terpene, three-dimensional polymers of natural terpene, aromatic-modified terpene resins, hydrogenated derivatives of aromatic-modified terpene resins, terpene phenol resins, hydrogenated derivatives of terpene phenol resins, terpene resins (monoterpene, diterpene, triterpene, polyterpene and the like) and hydrogenated terpene resins; and petroleum hydrocarbon-based compounds such as aliphatic petroleum hydrocarbon resins (C5-based resins), hydrogenated derivatives of aliphatic petroleum hydrocarbon resins, aromatic petroleum hydrocarbon resins (C9-based resins), hydrogenated derivatives of aromatic petroleum hydrocarbon resins, dicyclopentadiene-based resins, hydrogenated derivatives of dicyclopentadiene-based resins, C5/C9 copolymer-based resins, hydrogenated derivatives of C5/C9 copolymer-based resins, alicyclic petroleum hydrocarbon resins and hydrogenated derivatives of alicyclic petroleum hydrocarbon resins. These tackifiers can be used singly or in combinations of two or more.

As the tackifier, there can also be used liquid tackifier resins which are colorless to light yellow in color tone, substantially free from odor, and good in thermal stability.

Hereinafter, preferable tackifiers meeting the applications and performance will be described more specifically.

(Tackifiers of hydrogenated derivatives)

From the viewpoints of difficulty in coloring and lowness in odor, the tackifier is preferably hydrogenated derivatives. The hydrogenated derivatives are not especially limited, but examples thereof include hydrogenated derivatives of aromatic-modified terpene resins, hydrogenated derivatives of terpene phenol resins, hydrogenated derivatives of aliphatic petroleum hydrocarbon resins (C5-based resins), hydrogenated derivatives of aromatic petroleum hydrocarbon resins (C9-based resins), hydrogenated derivatives of dicyclopentadiene-based resins, hydrogenated derivatives of C5/C9 copolymer-based resins and hydrogenated derivatives of alicyclic petroleum hydrocarbon resins. Among these, especially preferable are hydrogenated derivatives of aromatic petroleum hydrocarbon resins (C9-based resins) and hydrogenated derivatives of dicyclopentadiene-based resins. Commercially available products of such hydrogenated derivatives are not especially limited, but examples thereof include Arkon P (trade name) and Arkon M (trade name) manufactured by Arakawa Chemical Industries, Ltd., Clearon (trade name) manufactured by Yasuhara Chemical Co., Ltd., and ECR5400 (trade name) manufactured by Exxon Mobil Corp.

(Tackifiers other than hydrogenated derivatives)

Tackifiers other than hydrogenated derivatives are not especially limited, but examples thereof include natural rosin, modified rosin, glycerol esters of natural rosin, glycerol esters of modified rosin, pentaerythritol esters of natural rosin and pentaerythritol esters of modified rosin; copolymers of natural terpene, three-dimensional polymers of natural terpene, aromatic-modified terpene resins, terpene phenol resins and terpene resins; and aliphatic petroleum hydrocarbon resins (C5-based resins), aromatic petroleum hydrocarbon resins (C9-based resins), dicyclopentadiene-based resins, C5/C9 copolymer-based resins and alicyclic petroleum hydrocarbon resins. Among these, preferable are aliphatic petroleum hydrocarbon resins (C5-based resins), aromatic petroleum hydrocarbon resins (C9-based resins), C5/C9 copolymer-based resins, alicyclic petroleum hydrocarbon resins, terpene resins, natural and modified rosin esters, and mixtures thereof. Commercially available products thereof include Wingtack Extra (trade name) manufactured by Sartomer Co., Inc., Piccotac (trade name) manufactured by Eastman Chemical Co., Escorez (trade name) manufactured by ExxonMobil Chemicals Co., Sylvagum (trade name) and Sylvalite (trade name) manufactured by Arizona Chemical Co., LLC., and Piccolyte (trade name) manufactured by Ashland Inc.

(Aliphatic-based tackifiers)

From the viewpoints of providing an adhesive composition having high tackiness and high retentivity, and the economic efficiency, as the tackifier, aliphatic-based tackifiers are preferably used. The aliphatic-based tackifiers are not especially limited, but examples thereof include aliphatic petroleum hydrocarbon resins (C5-based resins), hydrogenated derivatives of aliphatic petroleum hydrocarbon resins (C5-based resins), C5/C9 copolymer-based resins, hydrogenated derivatives of C5/C9 copolymer-based resins, alicyclic petroleum hydrocarbon resins and hydrogenated derivatives of alicyclic petroleum hydrocarbon resins. Here, the aliphatic-based tackifier refers to a tackifier in which the content of an aliphatic hydrocarbon group is preferably 50% by mass or higher, more preferably 70% by mass or higher, still more preferably 80% by mass or higher, further still more preferably 88% by mass or higher, and further still more preferably 95% by mass or higher. When the content of an aliphatic hydrocarbon group is in the above range, the tackiness, the retentivity and the economic efficiency are likely to be further improved.

The aliphatic-based tackifier can be produced by homopolymerizing or copolymerizing a monomer having an aliphatic group and a polymerizable unsaturated group. The monomer having an aliphatic group and a polymerizable unsaturated group is not especially limited, but examples thereof include natural or synthetic terpenes having a C5 or C6, cyclopentyl or cyclohexyl group. Further, other monomers usable in the copolymerization are not especially limited, but examples thereof include 1,3-butadiene, cis-1,3-pentadiene, trans-1,3-pentadiene, 2-methyl-1,3-butadiene, 2-methyl-2-butene, cyclopentadiene, dicyclopentadiene, terpene and terpene phenol resins.

(Aromatic tackifiers)

From the viewpoint of providing an adhesive composition having high adhesive strength and high coatability, as the tackifier, aromatic tackifiers are preferably used. The aromatic tackifiers are not especially limited, but examples thereof include aromatic petroleum hydrocarbon resins (C9-based resins) and C5/C9 copolymer-based resins. Here, the aromatic tackifier refers to a tackifier in which the content of an aromatic hydrocarbon group is preferably 50% by mass or higher, more preferably 70% by mass or higher, still more preferably 80% by mass or higher, further still more preferably 88% by mass or higher, and further still more preferably 95% by mass or higher. When the content of an aromatic hydrocarbon group is in the above range, the tack strength and the coatability are likely to be further improved.

The aromatic tackifier can be produced by homopolymerizing or copolymerizing a monomer having an aromatic group and a polymerizable unsaturated group. The monomer having an aromatic group and a polymerizable unsaturated group is not especially limited, but examples thereof include styrene, A-methylstyrene, vinyltoluene, methoxystyrene, tert-butylstyrene, chlorostyrene and an indene monomer (including methylindene). Further, other monomers usable in the copolymerization are not especially limited, but examples thereof include 1,3-butadiene, cis-1,3-pentadiene, trans-1,3-pentadiene, 2-methyl-1,3-butadiene, 2-methyl-2-butene, cyclopentadiene, dicyclopentadiene, terpene and terpene-phenol resins.

(Tackifiers having affinity for blocks of a glass phase (for example, the polymer block (Ar)) and/or a non-glass phase (for example, the polymer block (D)) of the block copolymer)

From the viewpoints of high adhesion, variation with time of adhesive strength or creep performance (their lower values are better), low melt viscosity, heat resistance and the like and the good balance among these as the adhesive composition, it is more preferable that the adhesive composition comprises 20 to 75% by mass of a tackifier having affinity for blocks of the non-glass phase (usually, middle blocks) of the block copolymer, and 0.1 to 30% by mass of a tackifier having affinity for blocks (usually, outer-side blocks) of the glass phase of the block copolymer. Here, the block copolymer is a concept of comprising the components (A) and (B).

The content of the tackifier having affinity for the non-glass phase of the block copolymer is preferably 20 to 75% by mass, more preferably 25 to 70% by mass, and still more preferably 30 to 65% by mass, based on 100% by mass of the adhesive composition.

The tackifier having affinity for blocks (for example, the polymer block (Ar)) of the glass phase of the block copolymer is not especially limited, but preferably are, for example, resins having an aromatic ring in their molecule.

Such resins are not especially limited, but examples thereof include aromatic group-containing resins such as homopolymers or copolymers containing vinyltoluene, styrene, α-methylstyrene, cumarone or indene as a constituting unit. Among these, preferable are Kristalex, Plastolyn and Piccotex (manufactured by Eastman Chemical Co., trade names) having α-methylstyrene.

The content of the tackifier having affinity for blocks of the glass phase of the block copolymer is preferably 0.5 to 30% by mass, more preferably 1 to 20% by mass, and still more preferably 2 to 12% by mass, based on 100% by mass of the adhesive composition.

From the viewpoint of high initial adhesive strength, high wettability, low melt viscosity of the adhesive composition, high coatability or the like, it is preferable to use, as the tackifier, a petroleum resin having an aroma content of 3 to 12% by mass. Such a petroleum resin is not especially limited, but examples thereof include aliphatic petroleum hydrocarbon resins (C5-based resins), hydrogenated derivatives of aliphatic petroleum hydrocarbon resins (C5-based resins), aromatic petroleum hydrocarbon resins (C9-based resins), hydrogenated derivatives of aromatic petroleum hydrocarbon resins (C9-based resins), dicyclopentadiene-based resins, hydrogenated derivatives of dicyclopentadiene-based resins, C5/C9 copolymer-based resins, hydrogenated derivatives of C5/C9 copolymer-based resins, alicyclic petroleum hydrocarbon resins and hydrogenated derivatives of alicyclic petroleum hydrocarbon resins. The aroma content of the petroleum resin is preferably 3 to 12% by mass, and more preferably 4 to 10% by mass. Among these, hydrogenated petroleum resins are especially preferable.

From the viewpoint of high initial adhesive strength, high wettability, low melt viscosity of the adhesive composition, high coatability or the like, it is preferable to use, as the tackifier, a styrene oligomer. The styrene oligomer is not especially limited, but includes aromatic petroleum hydrocarbon resins (C9-based resins) such as Piccolastic A5 and Piccolastic A75 (manufactured by Eastman Chemical Co., trade names).

The content of the styrene oligomer is preferably 35% by mass or lower, more preferably 30% by mass or lower, and still more preferably 25% by mass or lower, based on 100% by mass of the adhesive composition.

From the viewpoints of high low-odor property, high weather resistance, high transparency, colorlessness, low thermal discoloration and the like, it is preferable to use, as the tackifier, hydrogenated resins (for example, the above hydrogenated derivatives).

The content of the tackifier is 1 part by mass or higher, preferably 30 parts by mass or higher, more preferably 50 parts by mass or higher, and still more preferably 75 parts by mass or higher, based on 100 parts by mass of the block copolymer composition. Further, the content of the tackifier is 600 parts by mass or lower, preferably 500 parts by mass or lower, and more preferably 400 parts by mass or lower, based on 100 parts by mass of the block copolymer composition. Further, the content of the tackifier is 1 to 600 parts by mass, preferably 10 to 600 parts by mass, more preferably 30 to 500 parts by mass, and still more preferably 50 to 400 parts by mass, based on 100 parts by mass of the block copolymer composition. When the content of the tackifier is in the above range, the adhesive property is further improved.

In the case where the adhesive composition according to the present embodiment comprises polymers described later other than the component (A) and the component (B), the content of the tackifier is 1 to 600 parts by mass, preferably 10 to 600 parts by mass, more preferably 30 to 500 parts by mass, and still more preferably 50 to 400 parts by mass, based on 100 parts by mass of the total of the polymers other than the component (A) and the component (B) and the block copolymer composition. When the content of the tackifier is in the above range, the adhesive property is further improved.

(Softening agent)

The "softening agent" refers to one having functions of reducing the hardness of the adhesive composition and reducing the viscosity thereof. The softening agent is not especially limited, but examples thereof include well-known oils such as paraffinic process oils, naphthenic process oils, aroma-based process oils and mixed oils thereof; plasticizers; synthetic liquid oligomers; and mixtures thereof.

Hereinafter, preferable softening agents meeting the applications and performance will be described more specifically.

From the viewpoints of the viscosity reduction, the tackiness improvement and the low hardness of the adhesive composition, oils can be used. The oils are not especially limited, but include well-known paraffinic process oils, naphthenic process oils, aroma-based process oils and mixed oils thereof.

In the case where the adhesive composition is used as transdermal absorption preparations, from the viewpoints of improving the transdermal absorbability and the preservation stability, and enhancing the drug solubility to the adhesive composition, plasticizers can be used as the softening agent. The plasticizers are not especially limited, but examples thereof include liquid paraffin; fatty acid esters composed of higher fatty acids having 12 to 16 carbon atoms, such as isopropyl myristate, ethyl laurate and isopropyl palmitate, and lower monohydric alcohols having 1 to 4 carbon atoms; fatty acids having 8 to 10 carbon atoms; glycols such as ethylene glycol, diethylene glycol, triethylene glycol, polyethylene glycol, propylene glycol and polypropylene glycol; oils and fats such as olive oil, castor oil, squalene and lanolin; organic solvents such as ethyl acetate, ethyl alcohol, dimethyl decyl sulfoxide, decyl methyl sulfoxide, dimethyl sulfoxide, dimethylformamide, dimethylacetamide, dimethyllaurylamide, dodecylpyrrolidone, isosorbitol, oleyl alcohol and lauric acid; liquid surfactants; and ethoxylated stearyl alcohol, glycerol esters, isotridecyl myristate, N-methylpyrrolidone, ethyl oleate, oleic acid, diisopropyl adipate, octyl palmitate, 1,3-propanediol, and glycerol. From among these, compounds liquid at normal temperature are used. Among these, glycerol esters are preferable; and more preferable are medium chain fatty acid triglycerides which are esters of fatty acids having 8 to 10 carbon atoms and glycerol. Examples of the medium chain fatty acid triglycerides include tri(caprylic acid/capric acid) glyceryl. The plasticizer may be used singly or in combinations of two or more.

In the case where the adhesive composition and pressure-sensitive adhesive tapes are used as medical pressure-sensitive adhesive tapes such as taping tapes, combinations of liquid paraffin with other plasticizers are preferably used.

In the case where the adhesive composition and the pressure-sensitive adhesive tapes are used in medical applications, the addition amount of the plasticizer is preferably 3 to 30% by mass, more preferably 3 to 20% by mass, and still more preferably 3 to 10% by mass, based on 100% by mass of the adhesive composition. When the addition amount of the liquid plasticizer is 3% by mass or larger, the transdermal absorbability, the preservation stability, and the drug solubility to the adhesive composition are likely to be further improved. Further, when the addition amount of the liquid plasticizer is 20% by mass or smaller, the cohesive force of the adhesive composition is likely to be further improved.

In the case where the adhesive composition is intended to be made softer, from the viewpoint of improving the bleeding property, synthetic liquid oligomers can be used. The synthetic liquid oligomers are not especially limited, but examples thereof include styrene oligomers, butadiene oligomers, isoprene oligomers and butene oligomers.

Commercially available products of such softening agents are not especially limited, but examples thereof include Diana Fresia S32 (trade name), Diana Process Oil PW-90 (trade name) and Diana Process Oil NS-90S (trade name), manufactured by Idemitsu Kosan Co., Ltd., White Oil Broom 350 (trade name) and DN Oil KP-68 (trade name), manufactured by Kukdong Oil&Chem Co., Ltd., Enerper M1930 (trade name), manufactured by BP Chemicals Ltd., Kaydol (trade name), manufactured by Crompton Corp., Primol 352 (trade name), manufactured by Esso Standard Petroleum Co., Ltd., and KN4010 (trade name), manufactured by PetroChina Co.

Further, the content of the softening agent is 0 to 200 parts by mass, preferably 10 to 175 parts by mass, and more preferably 20 to 150 parts by mass, based on 100 parts by mass of the block copolymer composition. When the content of the softening agent is in the above range, the adhesive property is further improved.

Further, the content of the softening agent is preferably 35% by mass or lower, and more preferably 3% by mass or higher and 30% by mass or lower, based on the adhesive composition. When the content of the softening agent is in the above range, the adhesive property is further improved.

In the case where the adhesive composition according to the present embodiment comprises polymers, described later, other than the component (A) and the component (B), the content of the softening agent is 0 to 200 parts by mass, preferably 10 to 175 parts by mass, and more preferably 20 to 150 parts by mass, based on 100 parts by mass of the total of the polymers other than the component (A) and the component (B) and the block copolymer composition. When the content of the softening agent is in the above range, the adhesive property is further improved.

(Other components)

The adhesive composition according to the present embodiment may comprise, as required, polymers other than the component (A) and the component (B), waxes, polar group-containing polymers, stabilizers and microparticulate fillers.

(Polymers other than the component (A) and the component (B) )

Polymers other than the component (A) and the component (B) are not especially limited, but examples thereof include polyolefinic copolymers, vinyl aromatic elastomers and other rubbers. Here, in the present description, "other than the component (A) and the component (B)" means corresponding to neither of the component (A) and the component (B).

The polyolefinic copolymers are not especially limited, but examples thereof include atactic polypropylene and ethylene-ethyl acrylate copolymers.

The vinyl aromatic elastomers are not especially limited, but examples thereof include styrene-ethylene-based block copolymers, styrene-butadiene-based block copolymers, styrene-propylene-based block copolymers, styrene-isoprene-based block copolymers, styrene-butadiene-isoprene-based block copolymers, hydrogenated styrene-butadiene-based block copolymers, hydrogenated styrene-isoprene-based block copolymers and hydrogenated styrene-butadiene-isoprene-based block copolymers, which are polymers other than the component (A) and the component (B).

Further, the content of the vinyl aromatic elastomers other than the component (A) and the component (B) is preferably 5 to 95 parts by mass, more preferably 10 to 90 parts by mass, and still more preferably 15 to 85 parts by mass, based on 100 parts by mass of the total of the component (A) and the component (B) and block copolymers other than the component (A) and the component (B) .

The other rubbers are not especially limited, but examples thereof include natural rubber; and synthetic rubbers such as isoprene-isobutylene rubber, polyisoprene rubber, polybutadiene rubber, styrene-butadiene rubber, styrene-isoprene rubber, propylene-butylene rubber, ethylene-propylene rubber, chloroprene rubber, acrylic rubber and polypentenamer rubber. Among these, from the viewpoints of the crosslinkability and the economic efficiency, natural rubber is preferable.

By using natural rubber, it is likely that the crosslinkability of the adhesive composition is further improved and the adhesive composition is excellent also in the economic efficiency.

The content of the natural rubber is preferably 3 to 90% by mass, more preferably 10 to 80% by mass, and still more preferably 15 to 75% by mass, based on 100% by mass of the adhesive composition. When the content of the natural rubber is in the above range, the crosslinkability, the heat resistance, the solvent resistance and the economic efficiency of the adhesive composition are likely to be further improved.

Hereinafter, preferable polymers other than the component (A) and the component (B) meeting applications and performance will be described more specifically.

(Hydrogenated vinyl aromatic elastomer)

From the viewpoints of the reduction of adhesive residue when the viscous adhesive is pasted on an adherend and peeled off, the suppression of variation with time of the adhesive strength or the creeping property (their lower values are better), the heat resistance, the weather resistance, and the like, a hydrogenated vinyl aromatic elastomer can be used. The hydrogenated vinyl aromatic elastomer is not especially limited, but examples thereof include hydrogenated styrene-butadiene-based block copolymers having a structure of S-EB-S (S: polystyrene block, EB: ethylene/butylene copolymer block) or the like; hydrogenated styrene-isoprene-based block copolymers having a structure of S-EP-S (S: polystyrene block, EP: ethylene/propylene copolymer block) or the like; and hydrogenated styrene-butadiene-isoprene-based block copolymers having a structure of S-EEP-S (S: polystyrene block, EEP: ethylene/ethylene/propylene copolymer block) or the like. Among these, preferable are hydrogenated styrene-butadiene-based block copolymers and hydrogenated styrene-isoprene-based block copolymers.

The styrene content of the hydrogenated vinyl aromatic elastomer is preferably 10% by mass to 45% by mass, more preferably 13% by mass to 40% by mass, and still more preferably 15% by mass to 35% by mass, based on 100% by mass of the hydrogenated vinyl aromatic elastomer.

Further, the content of the polystyrene block of the hydrogenated vinyl aromatic elastomer is preferably 30% by mass or lower, more preferably 21% by mass or lower, and still more preferably 15% by mass or lower, with based on 100% by mass of the hydrogenated vinyl aromatic elastomer. When the content of the polystyrene block is in the above range, the flexibility and the compatibility are likely to be further improved.

Further, a higher content of B in the ethylene/butylene copolymer block in the hydrogenated vinyl aromatic elastomer is better; and the content of B preferably 35% by mol or higher, more preferably 45% by mol or higher, still more preferably 55% by mol or higher, and especially preferably 60% by mol or higher, based on 100% by mass of the hydrogenated vinyl aromatic elastomer,. When the content of B in the ethylene/butylene copolymer block is in the above range, the flexibility and the compatibility are likely to be further improved.

The hydrogenation ratio of unsaturated groups in the conjugated diene monomer unit in the hydrogenated vinyl aromatic elastomer is preferably higher than 80% by mol.

(Non-hydrogenated vinyl aromatic elastomer)

From the viewpoint of high flexibility, high adhesion, suppression of gelation, high economic efficiency or the like as the adhesive composition, a non-hydrogenated vinyl aromatic elastomer may be used. The non-hydrogenated vinyl aromatic elastomer is not especially limited, but examples thereof include styrene-ethylene-based block copolymers; styrene-butadiene-based block copolymers having a structure S-B-S, $(S-B)_nX$ (S: polystyrene block, B: polybutadiene block, X: a residue of a coupling agent) or the like; styrene-propylene-based block copolymers; styrene-isoprene-based block copolymers having a structure of S-I-S, $(S-I)_nX$ (S: polystyrene block, I: polyisoprene block, X: a residue of a coupling agent) or the like; and styrene-butadiene-isoprene-based block copolymers having a structure of $(S-(I/B))_nX$, S-(I/B)-S (S: polystyrene block, I/B: isoprene/butadiene copolymer block (isoprene and butadiene may be alternately arranged in any proportion, and the proportion may not be constant), X: a residue of a coupling agent) or the like. Among these, $(S-I)_nX$, $(S-B)_nX$ and $(S-(I/B))_nX$ are preferable, and those having a radial structure are more preferable. These may be used singly or in combinations of two or more.

The styrene content of the non-hydrogenated vinyl aromatic elastomer is preferably 45% by mass or lower, based on 100% by mass of the non-hydrogenated vinyl aromatic elastomer.

Further, the content of diblocks (for example, S-B, S-I, S-B-X, S-I-X) of the non-hydrogenated vinyl aromatic elastomer is preferably 10 to 80% by mass, based on 100% by mass of the non-hydrogenated vinyl aromatic elastomer,.

(Isoprene-based block copolymer)

From the viewpoints of the economic efficiency and the tack as the adhesive composition, an isoprene-based block copolymer having a non-hydrogenated isoprene monomer unit may be used. The isoprene-based block copolymer is not especially limited, but preferable are, for example, styrene-isoprene-based block copolymers having a structure of (S-I)n, (S-I)n-S, (S-I)nX (S: polystyrene block, I: polyisoprene block, n: an integer of 1 or more, preferably an integer of 1 to 6, X: a residue of a coupling agent) or the like. These may be used singly or in combinations of two or more.

The styrene content of the isoprene-based block copolymer is preferably 30% by mass or lower, more preferably 25% by mass or lower, still more preferably 20% by mass or lower, and further still more preferably 18% by mass or lower, based on 100% by mass of the isoprene-based block copolymer.

(Conjugated diene-based rubber)

From the viewpoints of the processability, the low melt viscosity at 180°C or lower, and good tack, tack strength, adhesion and die cutting property, a conjugated diene-based rubber can be used. The conjugated diene-based rubber is not especially limited, but examples thereof include isoprene-isobutylene rubber, polyisoprene rubber, polybutadiene rubber, styrene-butadiene rubber, styrene-isoprene rubber and propylene-butylene rubber.

Further, from the viewpoint of improving the self-back face tack strength and the skin patching strength as a composition for pressure-sensitive adhesive tapes, a polybutadiene rubber or a polyisoprene rubber may be used. Among these, a polyisoprene rubber is more preferable. The addition amount of the polybutadiene rubber and the polyisoprene rubber is preferably 3 to 25% by mass, more preferably 5 to 20% by mass, and still more preferably 5 to 15% by mass, based on 100% by mass of the adhesive composition. When the addition amount of the polybutadiene rubber and the polyisoprene rubber is 3% by mass or larger, the self-back face tack strength and the skin patching strength are likely to be further improved. Further, when the addition amount of the polybutadiene rubber and the polyisoprene rubber is 25% by mass or smaller, it is likely that the cohesive force is further improved and the adhesive residue is more suppressed.

From the viewpoints of the processability, the low melt viscosity at 180°C or lower, and good tack, tack strength and adhesion, as the conjugated diene-based rubber, a conjugated diene-based diblock copolymer may be used. The conjugated diene-based diblock copolymer is not especially limited, but examples thereof include polymers having a structure of S-I, (S-I)X, S-B, (S-B)X or the like, and hydrogenated materials thereof. These may be used singly or in combinations of two or more, and may be liquid or solid at normal temperature.

The content of the conjugated diene-based rubber is preferably 3 to 90% by mass, more preferably 10 to 80% by mass, and still more preferably 15 to 75% by mass, based on 100% by mass of the adhesive composition. When the content of the conjugated diene-based rubber is in the above range, the oil bleeding resistance, low melt viscosity, tack, tack strength, adhesion and flexibility of the adhesive composition are likely to be further improved.

(Ionomer)

In the case where as the adhesive composition, there are needed high low-temperature coatability, creeping property, high strength or high elongation, and the like, a polymer may be used in the state of being an ionomer. The ionomer is not especially limited, but preferable are, for example, homopolymers or copolymers containing carboxylates, sulfonates or phosphonates neutralized or partially neutralized with metal ions. The content of the ionomer is preferably 5% by mass or lower, based on the total amount of the adhesive composition.

(Polyolefinic resin)

From the viewpoint of high temperature storage stability, high elongation, the reduction of the amount (55% by mass or smaller, further, 45% by mass or smaller, in the composition) of the tackifier in the adhesive composition, or the like, a polyolefinic resin can be used. The polyolefinic resin is not especially limited, but there are preferably used, for example, a copolymer of an α-olefin with an olefin, or a propylene homopolymer. The melting point (condition: DSC measurement, 5°C/min) of these polymers is preferably 110°C or lower, more preferably 100°C or lower, and still more preferably 60°C to 90°C. These polymers may be resins or elastomers.

Further from the viewpoint of the creeping performance (its lower value is better), an olefinic elastomer having blocks is more preferable. The molecular weight distribution of these polymers is preferably 1 to 4, and more preferably 1 to 3. Further from the viewpoint of the processability, combined use of two or more of the polymers is more preferable. Specifically, combined use of the polymers of 30,000 to 60,000 and 60,000 to 90,000 is preferable; and combined use of at least the polymers of 35,000 to 55,000 and 60,000 to 80,000 is more preferable.

(Liquid component)

In the adhesive composition using the polyolefinic resin, a liquid component (oil or the like) is preferably contained. The content of the liquid component is preferably 20% by mass or higher, and more preferably 25% by mass or higher, based on 100% by mass of the adhesive composition. Further, in the case where the elongation is needed, combined use of an olefinic elastomer is preferable; and combined use of the olefinic elastomer having a Tg of -10°C or lower is more preferable.

(Wax)

In the adhesive composition, as required, a wax may be contained. The addition amount of the wax is preferably 20% by mass or lower, more preferably 2 to 10% by mass, and still more preferably 5 to 10% by mass, based on 100% by mass of the adhesive composition. When the addition amount of the wax is in the above range, the melt viscosity, particularly the melt viscosity at 140°C or lower, is likely to be more lowered.
The wax is not especially limited, but examples thereof include paraffin wax, microcrystalline wax and Fischer-Tropsh wax. By using such wax, the melt viscosity, particularly the melt viscosity at 140°C or lower, is likely to be more lowered.
The melting point of the wax is preferably 50°C or higher, more preferably 65°C or higher, still more preferably 70°C or higher, and further still more preferably 75°C or higher. Further, the melting point of the wax is preferably 110°C or lower. When the melting point of the wax is in the above range, the melt viscosity, particularly the melt viscosity at 140°C or lower, is likely to be more lowered.
Here, the softening point of the tackifier to be concurrently used with the wax is preferably 70°C or higher, and more preferably 80°C or higher. G'
(measurement condition: 25°C, 10 rad/sec) of the adhesive composition to be obtained in this case is preferably 1 MPa or lower; and the crystallization temperature thereof is preferably 7°C or lower.

(Polar group-containing polymer)

The adhesive composition may contain, as required, a polar group-containing polymer having an atom(s) selected from the group consisting of nitrogen, oxygen, silicon, phosphorus, sulfur, tin and the like. The polar group-containing polymer is not especially limited, but examples thereof include so-called modified polymers in which these polar group-containing functional groups are bound to block copolymers, modified block copolymers obtained by modifying block copolymer components with a modifier such as maleic anhydride, and oils modified on side chains and terminals with an amine, epoxy, carboxylic acid, carboxylic anhydride or the like. By using the polar group-containing polymer, there is likely to be further improved the adhesive property to adherends having a high SP value, such as resins including superabsorbent polymers (SAP), acrylic resins, vinyl chloride resins and nylon resins, their crosslinked materials, glasses, and metals.

(Stabilizer)

The adhesive composition may contain, as required, a stabilizer. The "stabilizer" is a material to be blended to prevent hot melt adhesives from the reduction of the molecular weight, the gelation and the coloring, the generation of odors and the like due to heat and to improve the stability of the hot melt adhesives, and is not especially limited. As the stabilizer, antioxidants, light stabilizers and the like can be exemplified. The antioxidants and the light stabilizers are usually used in disposable products, and can be used as long as being capable of providing disposable products as targets described later, and are not especially limited.

(Antioxidant)

The "antioxidant" is used in order to prevent the oxidative deterioration of the hot melt adhesives. The antioxidant is not especially limited, but examples thereof include phenol-based antioxidants such as 2,6-dit-butyl-4-methylphenol, n-octadecyl-3-(4'-hydroxy-3',5'-di-t-butylphenyl) propionate, 2,2'-methylenebis(4-methyl-6-t-butylphenol), 2,2'-methylenebis(4-ethyl-6-t-butylphenol), 2,4-bis[(octylthio)methyl]-o-cresol, 2-t-butyl-6-(3-t-butyl-2-hydroxy-5-methylbenzyl)-4-methylphenyl acrylate, 2,4-di-t-amyl-6-[1-(3,5-di-t-amyl-2-hydroxyphenyl)ethyl]phenyl acrylate and 2-[1-(2-hydroxy-3,5-di-tert-pentylphenyl)] acrylate; sulfur-based antioxidants such as dilauryl thiodipropionate, lauryl stearyl thiodipropionate pentaerythritol-tetrakis($\beta$-lauryl thiopropionate); and phosphorus-based antioxidants such as tris(nonylphenyl) phosphite and tris(2,4-di-t-butylphenyl) phosphite. These may be used singly or in combinations of two or more.

As specific examples of commercially available products of the antioxidant, there can be exemplified Sumiriser GM (trade name), Sumiriser TPD (trade name) and Sumiriser TPS (trade name), manufactured by Sumitomo Chemical Co., Ltd., Irganox 1076 (trade name), Irganox 1010 (trade name), Irganox HP2225FF (trade name), Irgafos 168 (trade name) and Irganox 1520 (trade name), manufactured by Ciba Specialty Chemicals Corp., and JF77 (trade name), manufactured by Johoku Chemical Co., Ltd.

The content of the antioxidant is preferably 10 parts by mass or lower, and more preferably 5 parts by mass or lower, based on 100 parts by mass of the adhesive composition.

(Light stabilizer)

The "light stabilizer" is used in order to improve the light resistance of hot melt adhesives. The light stabilizer is not especially limited, but examples thereof include benzotriazole-based ultraviolet absorbents such as 2-(2'-hydroxy-5'-methylphenyl)benzotriazole, 2-(2'-hydroxy-3',5'-t-butylphenyl)benzotriazole and 2-(2'-hydroxy-3',5'-di-t-butylphenyl)-5-chlorobenzotriazole; benzophenone-based ultraviolet absorbents such as 2-hydroxy-4-methoxybenzophenone; triazine-based ultraviolet absorbents; hindered amine-based light stabilizers; and lactone-based stabilizers: HALS. These may be used singly or in combinations of two or more.

As specific examples of commercially available products of the light stabilizer, there can be exemplified Tinuvin P (trade name), Tinuvin 770DF (trade name) and Cimassorb 2020FDL (trade name), manufactured by BASF, and ADK STAB LA-52 (trade name), ADK STAB LA-57 (trade name) and ADK STAB LA-77Y (trade name), manufactured by Adeka Corp.

The content of the light stabilizer is preferably 10 parts by mass or lower, and more preferably 5 parts by mass or lower, based on 100 parts by mass of the adhesive composition.

(Microparticulate fillers)

The microparticulate filler is not especially limited, but examples thereof include mica, calcium carbonate, kaolin, talc, titanium oxide, diatomaceous earth, urea-based resins, styrene beads, calcinated clay and starch. Their shapes are preferably globular and their sizes (the diameter in the case of globular shape) are not especially limited.

[Properties of the adhesive composition]

The performance of the adhesive composition according to the present embodiment can be measured by using pressure-sensitive adhesive tapes fabricated under the conditions indicated in Examples described later and under the measurement conditions indicated in Examples.

G' (measurement condition: 25°C, 10 rad/sec) of the adhesive composition is preferably 20,000 or lower, and more preferably 15,000 or lower. When G' of the viscous adhesive is in the above range, the adhesive residue of the adhesive composition is likely to be more reduced.

Further, the content of a liquid diluent is preferably 60% by mass or lower, based on 100% by mass of the adhesive composition. When the content of the liquid diluent is in the above range, the adhesive composition is useful particularly for the application of adhesives to skins including transdermal drug delivery applications.

The adhesive composition according to the present embodiment can be utilized also in paper processing, bookbinding, disposable products and the like. Among these, the adhesive composition, since being excellent in adhesion in the wet state, is suitable for disposable products. The disposable products can be constituted by solution coating or hot melt coating the adhesive composition on at least one kind of members selected from the group consisting of woven fabrics, nonwoven fabrics, rubbers, resins, papers, polyolefin films, polyester films, PVC films, ionomer films, PVDC films, PVA films, PC films, PS films, PAN films, PEN films, cellophane films, nylon films, polyimide films, EMAA films and EVOH films. Here, with respect to the polyolefin films, polyethylene films and polypropylene films are preferable for the reasons of the durability, the cost and the like.

The melt viscosity at 150°C of a hot melt viscous adhesive for disposable products for sanitary materials is preferably 5,000 mPa·s or lower, more preferably 400 to 3,500 mPa·s, and still more preferably 800 to 3,000 mPa·s. The melt viscosity is a viscosity of a melted material of a hot melt viscous adhesive, and is measured by a Brookfield RVT-type viscometer (spindle: No. 27). When the melt viscosity is in the above range, since the hot melt viscous adhesive becomes suitable for low-temperature coating, and it further becomes easy for it to be uniformly coated even on nonwoven fabrics and to penetrate therein, the hot melt viscous adhesive is suitable for disposable products for sanitary materials.

The disposable products for sanitary materials are not especially limited, but examples thereof include paper diapers, sanitary napkins, pet sheets, hospital gowns and white scrub suits.

[Production method of the adhesive composition]

The adhesive composition according to the present embodiment can be produced by mixing the above-mentioned block copolymer composition with the tackifier and the softening agent and as required, other components by a well-known method. A mixing method is not especially limited, but examples thereof include a method of homogeneously mixing the block copolymer composition, the tackifier and the softening agent under heating by a mixer, a kneader or the like.

The temperature in the mixing is preferably 130°C to 220°C, more preferably 140°C to 210°C, and still more preferably 150°C to 200°C. When the temperature in the mixing is 130°C or higher, it is likely that the block copolymer composition can be sufficiently melted and the dispersion is made to become good. Further, when the temperature in the mixing is 220°C or lower, it is likely that the evaporation of low-molecular weight components of the crosslinking agent and the tackifier, and the deterioration of the adhesive property can be prevented.

[Coating method of the adhesive composition]

A coating method of the viscous adhesive is not especially limited as long as being capable of providing products as targets, and examples thereof include a method of solution coating in which the adhesive composition is dissolved in a solvent and coated, and a method of hot melt coating or the like in which the adhesive composition is melted and coated.

Among these, preferable is a hot melt coating method from the viewpoints of the environmental pollution and the ease of coating. The hot melt coating method is roughly divided into contact application and non-contact application. The "contact application" refers to an application method in which when a hot melt adhesive is applied, an ejector is brought into contact with a member or a film. Further, the "non-contact application" refers to an application method in which when a hot melt adhesive is applied, an ejector is not brought into contact with a member or a film. The contact application method is not especially limited, but examples thereof include slot coater coating, roll coater coating, die coating, porous coating in which coating is carried out porously, and pattern coating. Further, the non-contact application method is not especially limited, but examples thereof include spiral coating in which an adhesive can be applied spirally by using air in intermittent coating or continuous coating, omega coating and control seam coating in which an adhesive can be applied wavelike, slot spray coating and curtain spray coating in which coating can be carried out planarly, dot coating in which coating can be carried out dottedly, bead coating in which coating can be carried out linearly, foaming melt coating in which a hot melt is foamed, coating on a threadlike material, and spray coating in which coating is carried out mistily.

In conventional hot melt adhesives poor in the thermal stability, the components easily phase-separate in high-temperature tanks. The phase separation even makes a cause of clogging of tank filters and transport pipe. In this regard, the adhesive composition according to the present embodiment is good in the thermal stability, and is homogeneously melted in a high-temperature tank of 100 to 220°C and makes the composition suppressed in the phase separation.

In production lines of disposable products for sanitary materials, a hot melt adhesive is generally applied on various types of members (for example, tissue, cotton, nonwoven fabric, polyolefin film and the like) of the disposable products. In the application, the hot melt adhesive may be used by being ejected from various types of ejectors.

The hot melt viscous adhesive for disposable products for sanitary materials is suitable for spiral coating. It is remarkably useful for production of disposable products that the hot melt viscous adhesive can be coated broadly by spray coating. In the hot melt adhesive capable of being coated broadly, the coating width can be regulated in a narrow one by regulating the pressure of hot air.

If a hot melt viscous adhesive is difficult to coat broadly, a number of spray nozzles are needed in order to obtain a sufficient adhesive area, making unsuitable even the production of disposable products having a comparatively small size, such as urine-taking liners, and disposable products having complex shapes.

Therefore, the hot melt viscous adhesive for disposable products for sanitary materials according to the present embodiment is, since being allowed to be coated broadly in spiral coating, suitable for the disposable products.

The hot melt viscous adhesive for disposable products for sanitary materials according to the present embodiment is, since being good in coating suitability at 150°C or lower, useful for production of the disposable products for sanitary materials. When the hot melt adhesive is coated at a high temperature, since polyolefin (preferably polyethylene) films being base materials of disposable products are melted or thermally shrunk, the appearance of the disposable products is largely damaged. When the hot melt viscous adhesive is coated at 150°C or lower, the appearance of polyolefin (preferably polyethylene) films and nonwoven fabrics being base materials of disposable products does almost not change, and the appearance of the products are not damaged.

The hot melt viscous adhesive for disposable products for sanitary materials according to the present embodiment is, since being excellent in high-speed coating suitability, suitable for production of disposable products for sanitary materials in a short time. In the case where a hot melt viscous adhesive is coated on a base material being conveyed at a high speed, in the contact-type coating method, breakage of the base material is generated due to friction in some cases. The hot melt viscous adhesive for disposable products for sanitary materials according to the present embodiment is, since being suitable for spiral coating, which is one type of non-contact coating, suitable for high-speed coating, and enables improving the production efficiency of the disposable products. Further, the hot melt viscous adhesive for disposable products for sanitary materials according to the present embodiment, which is suitable for high-speed coating, exhibits no disturbed coating pattern.

[Applications]

The adhesive composition according to the present embodiment has good solubility, coatability, discharge stability and surface, is excellent in tackiness and tack strength, and is good in the balance among these viscous adhesive properties. By making the best use of these features, the adhesive composition can be utilized for various types of pressure-sensitive adhesive tapes and labels, pressure-sensitive thin plates, pressure-sensitive sheets, surface protection sheets and films, backsizes for fixing various types of light-weight plastic molds, backsizes for fixing carpets, backsizes for fixing tiles, adhesives and the like, and can suitably be used particularly for pressure-sensitive adhesive tapes, pressure-sensitive adhesive sheets and films, pressure-sensitive adhesive labels, surface protection sheets and films, and sanitary viscous adhesives.

Examples

Hereinafter, the present invention will be described in detail by way of specific Examples and Comparative Examples, but the present invention is not limited to the following Examples. Here, in the following Examples and Comparative Examples, measurements of characteristics and physical properties of polymers were carried out by the following methods.

[(1): Properties of the block copolymer composition]

<(1-1) Weight-average molecular weight>

The weight-average molecular weights of the component (A) and the component (B) were determined by using a calibration curve (fabricated by using peak molecular weights of standard polystyrenes) determined by the measurement of a commercially available standard polystyrene, and by being based on the molecular weights of peaks in chromatogram. The software used for the measurement was HLC-8320EcoSEC collected; and the software used for the analysis was HLC-8320 analysis. A peak was determined as a component (A), the peak having a lowest peak top molecular weight in the range of the molecular weight of 30,000 or higher and having an area ratio thereof to the total peak area of the block copolymer composition of 0.1 or higher; and a peak was determined as a component (B), the peak having a peak top in the range of the molecular weight which was higher than that of the above peak top of the component (A) and was 60,000 or higher and having an area ratio thereof to the total peak area of 0.1 or higher.

(Measurement conditions)

GPC: HLC-8320GPC (manufactured by Tosoh Corp.)
Detector: RI
Detection sensitivity: 3 mV/min
Sampling pitch: 600 msec
Column: TSKgel superHZM-N (6 mm-I.D $\times$ 15 cm), 4 columns (manufactured by Tosoh Corp.)
Solvent: THF (tetrahydrofuran)
Flow rate: 0.6 mm/min
Concentration: 0.5 mg/mL
Column temperature: 40°C
Injection volume: 20 $\mu$L

<(1-2) Contents of the component (A) and the component (B) >

The proportion of an area of the peak of the component (A) to the total peak area of an elution curve measured in the above (1-1) was determined as a content of the component (A). Further, the proportion of an area of the peak of the component (B) to the total peak area of the elution curve measured in the above (1-1) was determined as a content of the component (B). Here, the area ratio was determined through vertical division at inflection points of the each peak by using the analysis software, HLC-8320 analysis.

<(1-3) Content of the vinyl aromatic monomer unit (styrene)>

A certain amount of the block copolymer composition obtained in Production Examples was dissolved in chloroform; and by using an ultraviolet spectrometer (UV-2450, manufactured by Shimadzu Corp.), there was measured the peak intensity at an absorption wavelength (262 nm) attributable to the vinyl aromatic compound component (styrene) in the solution. From the acquired peak intensity, the content of the vinyl aromatic monomer unit (styrene) was calculated by using the calibration curve.

<(1-4) Vinyl bond content of the conjugated diene monomer units in the component (A) and the component (B) before hydrogenation, and the hydrogenation ratio of the conjugated diene monomer units>

There were measured under the following conditions the vinyl bond content of the conjugated diene monomer units in the component (A) and the component (B) before hydrogenation, and the hydrogenation ratio of unsaturated groups in the conjugated diene monomer units by the nuclear magnetic resonance spectrum analysis (NMR).
By adding a large amount of methanol to the reaction solution before the hydrogenation reaction, a block copolymer was precipitated and recovered. Then, the obtained block copolymer was extracted with acetone, and vacuum dried. This was used as a sample for 1H-NMR measurement, and the vinyl bond content was measured.
By adding a large amount of methanol to the reaction solution after the hydrogenation reaction, a partially hydrogenated block copolymer was precipitated and recovered. Then, the obtained partially hydrogenated block copolymer was extracted with acetone, and vacuum dried. This was used as a sample for 1H-NMR measurement, and the hydrogenation ratio was measured.
The conditions of the 1H-NMR measurement were as follows.

(Measurement conditions)

Measuring instrument: JNM-LA400 (manufactured by JEOL Ltd.)
Solvent: deuterated chloroform
Measurement sample: taken-out products from the polymer before and after the hydrogenation
Sample concentration: 50 mg/mL
Observation frequency: 400 MHz
Chemical shift reference: TMS (tetramethylsilane)
Pulse delay: 2.904 sec
Number of times of scanning: 64 times
Pulse width: 45°

Measurement temperature: 26°C

[(2) Measurements of physical properties of the adhesive composition]

"Evaluation $\alpha$ of the adhesive composition"

<(2-1) Melt viscosity of the adhesive composition (Evaluation $\alpha$) >

The melt viscosities of the adhesive compositions obtained in Examples and Comparative Examples were each measured at 180°C by a Brookfield viscometer (DV-III, manufactured by Brookfield Engineering Laboratories, Inc.). The melt viscosity was evaluated based on the acquired value according to the following criteria. The evaluation was rated as $\bigcirc$, $\Delta$, $\times$ in the order from the best to the worst.

Melt viscosity (Pa·s) ≤ 100: O
100 < melt viscosity (Pa·s) ≤ 500: Δ
500 < melt viscosity (Pa·s) : ×

<(2-2) Tack (ball tack) of the adhesive composition (Evaluation α) >

The tacks of the adhesive compositions obtained in Examples and Comparative Examples were each evaluated by the inclined ball tack according to JIS-Z0237. Specifically, there was prepared a triangular apparatus (slope angel: 30°) equipped with a starting point where a rigid ball was placed, and an approach run path (100 mm) continuing from the starting point and a tacky face (100 mm) of a pressure-sensitive adhesive tape continuing from the approach run path on the slope; and the rigid ball (size: 1/32 to 32/32 inch) was rolled down from the upper starting point of the slope toward the tacky face on the lower part of the slope. A numerical value 32 times the size of the ball suspended on the tacky face was called a "ball number"; and a maximum ball number at which a corresponding ball was suspended on each tacky face was measured. Based on the acquired ball number, the tack of the adhesive composition was evaluated according to the following criteria. The evaluation was rated as O, Δ, × in the order from the best to the worst.

8 ≤ ball number: O
3 ≤ ball number < 8: Δ
Ball number < 3: ×

<(2-3) Tack strength of the adhesive composition (Evaluation α) >

The pressure-sensitive adhesive tapes of 25 mm in width obtained in Examples and Comparative Examples were each pasted on a SUS plate, and peeled off at a peeling speed of 300 mm/min; and the 180° peeling force at this time was measured. Based on the acquired peeling force, the tack strength of the adhesive composition was evaluated according to the following criteria. The evaluation was rated as O, Δ, × in the order from the best to the worst.

10 ≤ peeling force (N/10 mm): O
5 ≤ peeling force (N/10 mm) < 10: Δ
Peeling force (N/10 mm) < 5: ×

<(2-4) Retentivity of the adhesive composition (Evaluation α) >

The pressure-sensitive adhesive tapes obtained in Examples and Comparative Examples were each pasted in a contact area of 25 mm × 15 mm on a SUS plate. Thereafter, a load of 1 kg in the perpendicular downward direction was applied at 50°C on the pressure-sensitive adhesive tape, and the time until the pressure-sensitive adhesive tape slipped down was measured. Based on the acquired time, the retentivity of the adhesive composition was evaluated according to the following criteria. The evaluation was rated as ◎, O, Δ, × in the order from the best to the worst.

4,000 ≤ time (min): ◎
1,000 ≤ time (min) < 4,000: O
500 ≤ time (min) < 1,000: Δ
Time (min) < 500: ×

"Evaluation β of the adhesive composition"

<(2-5) Melt viscosity of the adhesive composition (Evaluation β) >

The melt viscosities of the adhesive compositions obtained in Examples and Comparative Examples were each measured at 160°C by a Brookfield viscometer (DV-III, manufactured by Brookfield Engineering Laboratories, Inc.). The melt viscosity was evaluated based on the acquired value according to the following criteria. The evaluation was rated as ◎, O, Δ, × in the order from the best to the worst.

Melt viscosity (Pa·s) ≤ 5: ◎
5 < melt viscosity (Pa·s) ≤ 10: O
10 < melt viscosity (Pa·s) ≤ 20: Δ
20 < melt viscosity (Pa·s) : ×

<(2-6) Tack (ball tack) of the adhesive composition (Evaluation β) >

The tacks of the adhesive compositions obtained in Examples and Comparative Examples were each evaluated by the inclined ball tack according to JIS-Z0237. Specifically, there was prepared a triangular apparatus (slope angel: 30°) equipped with a starting point where a rigid ball was placed, and an approach run path (100 mm) continuing from the starting point and a tacky face (100 mm) of a pressure-sensitive adhesive tape continuing from the approach run path on the slope; and the rigid ball (size: 1/32 to 32/32 inch) was rolled down from the upper starting point of the slope toward the tacky face on the lower part of the slope. A numerical value 32 times the size of the ball suspended on the tacky face was called a "ball number"; and a maximum ball number at which a corresponding ball was suspended on each tacky face was measured. Based on the acquired ball number, the tack of the adhesive composition was evaluated according to the following criteria. The evaluation was rated as ○, Δ, × in the order from the best to the worst.

18 ≤ ball number: ○
9 ≤ ball number < 18: Δ
Ball number < 9: ×

<(2-7) Tack (loop tack) of the adhesive composition (Evaluation β) >

The pressure-sensitive adhesive tapes of 300 mm in length × 15 mm in width obtained in Examples and Comparative Examples were each made into a loop form. The obtained loop-form pressure-sensitive adhesive tape was adhered in a contact area of 15 mm × 50 mm, in an adhering time of 3 sec and at an adhering speed of 500 mm/min on a SUS plate. Thereafter, the pressure-sensitive adhesive tape was peeled off at a peeling speed of 500 mm/min from the SUS plate while the peeling force was measured. Based on the acquired peeling force (N/15 mm), the tack of the adhesive composition was evaluated according to the following criteria. The evaluation was rated as ○, Δ, × in the order from the best to the worst.

13 ≤ peeling force (N/15 mm): ○
5 ≤ peeling force (N/15 mm) < 13: Δ
Peeling force (N/15 mm) < 5: ×

<(2-8) Tack strength of the adhesive composition (Evaluation β) >

The pressure-sensitive adhesive tapes of 25 mm in width obtained in Examples and Comparative Examples were each pasted on a SUS plate, and peeled off at a peeling speed of 300 mm/min; and the 180° peeling force at this time was measured. Based on the acquired peeling force, the tack strength of the adhesive composition was evaluated according to the following criteria. The evaluation was rated as ○, Δ, × in the order from the best to the worst.

7 ≤ peeling force (N/10 mm): ○
5 ≤ peeling force (N/10 mm) < 7: Δ
Peeling force (N/10 mm) < 5: ×

<(2-9) Retentivity of the adhesive composition (Evaluation β) >

The pressure-sensitive adhesive tapes obtained in Examples and Comparative Examples were each pasted in a contact area of 25 mm × 15 mm on a SUS plate. Thereafter, a load of 1 kg in the perpendicular downward direction was applied at 50°C on the pressure-sensitive adhesive tape, and the time until the pressure-sensitive adhesive tape slipped down was measured. Based on the acquired time, the retentivity of the adhesive composition was evaluated according to the following criteria. The evaluation was rated as ◎, ○, Δ, × in the order from the best to the worst.

100 ≤ time (min) <: ◎
40 ≤ time (min) < 100: ○
15 ≤ time (min) < 40: Δ
Time (min) < 15: ×

"Evaluation γ of the adhesive composition"

<(2-10) Melt viscosity of the adhesive composition (Evaluation γ) >

The melt viscosities of the adhesive compositions were each measured at 140°C by a Brookfield viscometer (DV-III, manufactured by Brookfield Engineering Laboratories, Inc.). The melt viscosity was evaluated based on the acquired value according to the following criteria. The evaluation was rated as ◎, ○, △, × in the order from the best to the worst.

Melt viscosity (Pa·s) ≤ 5: ◎
5 < melt viscosity (Pa·s) ≤ 15: ○
15 < melt viscosity (Pa·s) ≤ 35: △
35 < melt viscosity (Pa·s) : ×

<(2-11) Tack (loop tack) of the adhesive composition (Evaluation γ) >
The pressure-sensitive adhesive tapes of 250 mm in length × 15 mm in width obtained in Examples and Comparative Examples were each made into a loop form. The obtained loop-form pressure-sensitive adhesive tape was adhered in a contact area of 15 mm × 50 mm, in an adhering time of 3 sec and at an adhering speed of 500 mm/min on a SUS plate. Thereafter, the pressure-sensitive adhesive tape was peeled off at a peeling speed of 500 mm/min from the SUS plate while the peeling force was measured. Based on the acquired peeling force (N/15 mm), the tack of the adhesive composition was evaluated according to the following criteria. The evaluation was rated as ○, △, × in the order from the best to the worst.

22 ≤ peeling force (N/15 mm): O
18 ≤ peeling force (N/15 mm) < 22: △
Peeling force (N/15 mm) < 18: ×

<(2-12) Tack strength of the adhesive composition (Evaluation γ) >

The pressure-sensitive adhesive tapes of 25 mm in width obtained in Examples and Comparative Examples were each pasted on a SUS plate, and peeled off at a peeling speed of 300 mm/min; and the 180° peeling force at this time was measured. Based on the acquired peeling force, the tack strength of the adhesive composition was evaluated according to the following criteria. The evaluation was rated as ○, △, × in the order from the best to the worst.

15 ≤ peeling force (N/10 mm): O
12 ≤ peeling force (N/10 mm) < 15: △
Peeling force (N/10 mm) < 12: ×

<(2-13) Retentivity of the adhesive composition (Evaluation γ) >

The pressure-sensitive adhesive tapes obtained in Examples and Comparative Examples were each pasted in a contact area of 25 mm × 15 mm on a SUS plate. Thereafter, a load of 1 kg in the perpendicular downward direction was applied at 40°C on the pressure-sensitive adhesive tape, and the time until the pressure-sensitive adhesive tape slipped down was measured. Based on the acquired time, the retentivity of the adhesive composition was evaluated according to the following criteria. The evaluation was rated as ◎, ○, △, × in the order from the best to the worst.

250 ≤ time (min): ◎
100 ≤ time (min) < 250: O
15 ≤ time (min) < 100: △
Time (min) < 15: ×

"Quality evaluations of the adhesive composition"

<(2-14) Contamination property to adherends>

When the tack strengths of the adhesive compositions were measured in the above (2-3), (2-8) and (2-12), there was measured the area of the adhesive composition remaining on the surface of the SUS plate after the pressure-sensitive adhesive tape was peeled off. There was calculated the proportion of the area of the adhesive composition remaining on the surface of the SUS plate to the pressure-sensitive adhesive tape-pasted area; and based on the proportion, the contamination property to adherends was evaluated according to the following criteria. The evaluation was rated as ○, Δ, × in the order from the best to the worst.

Areal proportion (%) ≤ 5: O
5 < area proportion (%) ≤ 10: Δ
10 < area proportion (%): ×

<(2-15) Color fastness during processing>

The adhesive compositions obtained in Examples and Comparative Examples were each formed into a sheet form, and heated at 180°C for 180 min in a gear oven. The variation in the b value of the adhesive composition before and after the heating was measured by using a color difference meter (ZE-2000, manufactured by Nippon Denshoku Industries Co., Ltd.), and the color fastness was evaluated according to the following criteria. Here, in the measurement, the sheets were piled so as to have a thickness of 8 mm. The evaluation was rated as ○, Δ, X in the order from the best to the worst.

Difference in b value before and after the heating ≤ 15: O
15 < difference in b value before and after the heating ≤ 45: Δ
45 < difference in b value before and after the heating: ×

[(3) Preparation of a hydrogenation catalyst>

In Examples and Comparative Examples described later, a hydrogenation catalyst to be used when a hydrogenated block copolymer composition was fabricated was prepared by the following method. The atmosphere of a reaction vessel equipped with a stirring device was replaced by nitrogen, and 1 L of dried and refined cyclohexane was charged therein. Then, 100 mmol of bis (η5-cyclopentadienyl)titanium chloride was added. A n-hexane solution containing 200 mmol of trimethylaluminum was further added under sufficient stirring, and allowed to react at room temperature for about 3 days. Thereby, a hydrogenation catalyst was obtained.

[(4) Preparation of block copolymer compositions]

<Production Example 1>

A 40 L-internal volume stainless steel autoclave with a stirrer and a jacket was cleaned and dried, and the atmosphere thereof was replaced by nitrogen; 5,960 g of cyclohexane was charged; and warm water was passed through the jacket, and the content was set at 65°C. Thereafter, a cyclohexane solution containing 0.243 g of N,N,N',N'-tetrametylethylenediamine (hereinafter, referred to also as "TMEDA") and 3.59 g of n-butyllithium was added to the autoclave. Then, a cyclohexane solution containing 484 g of styrene was continuously added to the autoclave to cause styrene to be polymerized. At this time, the polymerization conversion rate of styrene was 100%. Successively, a cyclohexane solution containing 2,541 g of 1,3-butadiene was continuously added to the autoclave to cause 1,3-butadiene to be copolymerized. At this time, the polymerization conversion rate of the butadiene was 100%. Finally, 1.55 g of dimethoxydimethylsilane as a coupling agent was added to the autoclave to cause a coupling reaction. After the coupling agent addition, 0.67 g of methanol was added for deactivation to thereby obtain a block copolymer solution.

Then, the hydrogenation catalyst prepared as described above was added to the obtained block copolymer solution, in 100 ppm in terms of Ti of the hydrogenation catalyst based on 100 parts by mass of the block copolymer; and a hydrogenation reaction was carried out at a hydrogen pressure of 0.8 MPa at an average temperature of 92°C. The hydrogenation ratio of the conjugated diene monomer unit contained in the obtained block copolymer composition was 25.0% by mol.

Octadecyl-3-(3,5-di-t-butyl-4-hydroxyphenyl) propionate in 0.3 part by mass based on 100 parts by mass of the block copolymer was added to the block copolymer solution after the hydrogenation reaction, and sufficiently mixed. Thereafter, the solvent was removed under heating to thereby obtain a block copolymer composition of Production Example 1. The measurement results of the obtained block copolymer composition are shown in Table 1.

<Production Examples 2 to 6 and 8 to 10>

Block copolymer compositions of Production Examples 2 to 6 and 8 to 10 were obtained as in Production Example 1, except for altering the amounts of TMEDA, n-butyllithium, styrene, 1,3-butadiene, a coupling agent and methanol used, and the kind of the coupling agent to those indicated in Table 1, respectively. The measurement results of the each obtained block copolymer composition are shown in Table 1.

<Production Example 7>

A 40 L-internal volume stainless steel autoclave with a stirrer and a jacket was cleaned and dried, and the atmosphere thereof was replaced by nitrogen; cyclohexane was charged; and warm water was passed through the jacket, and the content was set at 65°C. Thereafter, a cyclohexane solution of TMEDA and n-butyllithium was added to the autoclave. Then, a cyclohexane solution containing styrene was continuously added to the autoclave to cause styrene to be polymerized. At this time, the polymerization conversion rate of styrene was 100%. Successively, a cyclohexane solution containing 1,3-butadiene was continuously added to the autoclave to cause 1,3-butadiene to be copolymerized. At this time, the polymerization conversion rate of the butadiene was 100%. Further successively, a cyclohexane solution containing styrene was continuously added to the autoclave to cause styrene to be copolymerized. At this time, the polymerization conversion rate of the styrene was 100%. Thereafter, methanol was added for deactivation to thereby obtain a block copolymer solution.

The obtained polymer was then subjected to a hydrogenation reaction using a Ti-based hydrogenation catalyst described in Japanese Patent Laid-Open No. 59-133203. The hydrogenation ratio of the conjugated diene monomer unit (butadiene) contained in the obtained block copolymer composition was 70% by mol. Here, the amounts of the reagents used in the reaction are shown in Table 1 collectively.

Octadecyl-3-(3,5-di-t-butyl-4-hydroxyphenyl) propionate was added in 0.3 parts by mass based on 100 parts by mass of the block copolymer to the obtained block copolymer solution, and sufficiently mixed. Thereafter, the solvent was removed under heating to thereby obtain a block copolymer composition of Production Example 7. The measurement results of the obtained block copolymer composition are shown in Table 1.

<Production Example 11>

(Component (A))

A 40 L-internal volume stainless steel autoclave with a stirrer and a jacket was cleaned and dried, and the atmosphere thereof was replaced by nitrogen; cyclohexane was charged; and warm water was passed through the jacket, and the content was set at 65°C. Thereafter, a cyclohexane solution of TMEDA and n-butyllithium was added to the autoclave. Then, a cyclohexane solution containing styrene was continuously added to the autoclave to cause styrene to be polymerized. At this time, the polymerization conversion rate of styrene was 100%. Successively, a cyclohexane solution containing 1,3-butadiene was continuously added to the autoclave to cause 1,3-butadiene to be copolymerized. At this time, the polymerization conversion rate of the butadiene was 100%. Thereafter, methanol was added for deactivation to thereby obtain a block copolymer solution.

Then, the hydrogenation catalyst prepared as described above was added in 100 ppm in terms of Ti of the hydrogenation catalyst based on 100 parts by mass of the block copolymer to the obtained block copolymer solution; and a hydrogenation reaction was carried out at a hydrogen pressure of 0.8 MPa at an average temperature of 82°C. Here, the amounts of the reagents used in the reaction are shown in Table 1 collectively.

Octadecyl-3-(3,5-di-t-butyl-4-hydroxyphenyl) propionate was added in 0.3 parts by mass thereof based on 100 parts by mass of the block copolymer to the obtained block copolymer solution, and sufficiently mixed. A component (A) of Production Example 11 was obtained by the above operation.

(Component (B))

A 40 L-internal volume stainless steel autoclave with a stirrer and a jacket was cleaned and dried, and the atmosphere thereof was replaced by nitrogen; cyclohexane was charged; and warm water was passed through the jacket, and the content was set at 65°C. Thereafter, a cyclohexane solution of TMEDA and n-butyllithium was added to the autoclave. Then, a cyclohexane solution containing styrene was continuously added to the autoclave to cause styrene to be polymerized. At this time, the polymerization conversion rate of styrene was 100%. Successively, a cyclohexane solution containing 1,3-butadiene was continuously added to the autoclave to cause 1,3-butadiene to be copolymerized. At this time, the polymerization conversion rate of the butadiene was 100%. Further successively, a cyclohexane solution containing styrene was continuously added to the autoclave to cause styrene to be copolymerized. At this time, the polymerization conversion rate of the styrene was 100%. Thereafter, methanol was added for deactivation to thereby obtain a block copolymer solution.

Then, the hydrogenation catalyst prepared as described above was added in 100 ppm in terms of Ti of the hydrogenation catalyst based on 100 parts by mass of the block copolymer to the obtained block copolymer solution;

and a hydrogenation reaction was carried out at a hydrogen pressure of 0.8 MPa at an average temperature of 85°C. Here, the amounts of the reagents used in the reaction are shown in Table 1 collectively.

Octadecyl-3-(3,5-di-t-butyl-4-hydroxyphenyl) propionate was added in 0.3 parts by mass based on 100 parts by mass of the block copolymer to the obtained block copolymer solution, and sufficiently mixed. A component (B) of Production Example 11 was obtained by the above operation.

Finally, the block copolymer solution containing the above component (A) and the block copolymer solution containing the above component (B) were mixed, and the solvent was removed under heating to thereby obtain a block copolymer composition of Production Example 11.

The measurement results of the obtained block copolymer composition are shown in Table 1.

<Production Examples 12 to 15 and 18 to 20>

Block copolymer compositions of Production Examples 12 to 15 and 18 to 20 were obtained as in Production Example 1, except for altering the amounts of the reagents used. The measurement results of the each obtained block copolymer composition are shown in Table 2.

<Production Examples 16 and 17>

Amine-modified block copolymer compositions of Production Examples 16 and 17 were obtained as in Production Example 1, except for using tetraglycidyl-1,3-bisaminomethylcyclohexane in place of dimethoxydimethylsilane, and altering the amounts of the reagents used. The measurement results of the each obtained block copolymer composition are shown in Table 2.

[Table 1]

| | | Production Example | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | |
| Cyclohexane (g) | | 5960 | 5960 | 5960 | 5960 | 5960 | 5960 | 5960 | 5960 | 5960 | 5960 | 5960 | 5960 |
| TMEDA(g) | | 0.243 | 0.281 | 0.344 | 0.327 | 0.425 | 0.193 | 0.146 | 0.254 | 0.254 | 0.176 | 0.976 | 0.085 |
| n-Butyllithium (g) | | 3.59 | 3.97 | 4.7 | 4.51 | 5.59 | 3.04 | 2.52 | 3.7 | 3.7 | 2.9 | 11.7 | 1.85 |
| Styrene(g) | | 484 | 453 | 576 | 576 | 454 | 917 | 300 | 484 | 484 | 454 | 454 | 235 |
| 1,3-Butadiene (g) | | 2541 | 2571 | 2457 | 2457 | 2570 | 2141 | 2457 | 2542 | 2542 | 2570 | 2570 | 2570 |
| Styrene (g) | | - | - | - | - | - | - | 280 | - | - | - | - | 220 |
| Name of Coupling Agent | | DMDMS | DMDMS | TCMS | TMMS | TMS | DMDMS | - | DMDMS | DMDMS | TMMS | - | - |
| Coupling Agent (g) | | 1.55 | 3.16 | 1.02 | 1.37 | 1.83 | 1.03 | - | 1.8 | 1.79 | 1.33 | - | - |
| Methanol (g) | | 0.67 | 0.53 | 1.33 | 1.33 | 1.66 | 0.76 | 0.81 | 0.84 | 0.84 | 0.58 | 5.38 | 0.47 |
| Content of Vinyl Aromatic Monomer Unit (% by mass) | | 16 | 15 | 19 | 18 | 15 | 30 | 19 | 16 | 16 | 15 | 15 | |
| Amount of Vinyl Bonds Before Hydrogenation of Conjugated Diene Monomer Unit (% by mol) | | 24 | 23 | 23 | 23 | 20 | 24 | 40 | 45 | 31 | 28 | 25 | |
| Component (A) | Structure | Ar-D | Ar-D | Ar-D | Ar-D | Ar-D | Ar-D | - | Ar-D | Ar-D | Ar-D | Ar-D | - |
| | Content (% by mass) | 65 | 35 | 70 | 74 | 71 | 72 | - | 60 | 60 | 60 | 60 | - |
| | Weight-Average Molecular Weight | 123000 | 108000 | 85000 | 90000 | 71000 | 140000 | - | 117000 | 117000 | 170000 | 31000 | - |

(continued)

| | | Production Example | | | | | | | | | | 11 | |
| | | 1 | 2 | 3 | 4 | 5 | 6 | 7 | 8 | 9 | 10 | | |
| Component (B) | Structure | $(Ar-D)_2X$ | $(Ar-D)_2X$ | $(Ar-D)_3-X$ | $(Ar-D)_3-X$ | $(Ar-D)_4-X$ | $(Ar-D)_2X$ | $Ar-D-Ar$ | $(Ar-D)_2X$ | $(Ar-D)_2X$ | $(Ar-D)_3-X$ | - | $Ar-D-Ar$ |
| | Content (% by mass) | 35 | 65 | 30 | 26 | 29 | 28 | 100 | 40 | 40 | 28 | - | 40 |
| | Weight-Average Molecular Weight | 251000 | 220000 | 250000 | 260000 | 265000 | 271000 | 200000 | 236000 | 236000 | 510000 | - | 350000 |
| Ratio of Weight-Average Molecular Weight | | 2.0 | 2.0 | 2.9 | 2.9 | 3.7 | 1.9 | - | 2.0 | 2.0 | 3 | 11.3 | |
| Hydrogenation ratio of Conjugated Diene Monomer Unit (% by mol) | | 25 | 44 | 30 | 28 | 30 | 28 | 70 | 0 | 85 | 27 | 25 | |

DMDMS: dimethoxydimethylsilane
TCMS: trichloromethylsilane
TMMS: trimethoxymethylsilane
TMS: tetramethoxysilane

[Table 2]

| | | | Production Example | | | | | | | | |
|---|---|---|---|---|---|---|---|---|---|---|---|
| | | | 12 | 13 | 14 | 15 | 16 | 17 | 18 | 19 | 20 |
| Name of Coupling Agent | | | DMDMS | DMDMS | DMDMS | DMDMS | TG | TG | DMDMS | DMDMS | DMDMS |
| Content of Vinyl Aromatic Monomer Unit (% by mass) | | | 16 | 16 | 25 | 25 | 16 | 25 | 25 | 16 | 25 |
| Amount of Vinyl Bonds Before Hydrogenation of Conjugated Diene Monomer Unit (% by mol) | | | 22 | 27 | 23 | 23 | 20 | 23 | 35 | 15 | 27 |
| Component (A) | Structure | | Ar-D | Ar-D | Ar-D | Ar-D | Ar-D | Ar-D | Ar-D | Ar-D | Ar-D |
| | Content (% by mass) | | 60 | 60 | 70 | 70 | 60 | 65 | 70 | 60 | 60 |
| | Weight-Average Molecular Weight | | 97000 | 96000 | 70000 | 75000 | 93000 | 70000 | 70000 | 92000 | 56000 |
| Component (B) | Structure | | $(Ar\text{-}D)_2X$ | $(Ar\text{-}D)_2X$ | $(Ar\text{-}D)_2X$ | $(Ar\text{-}D)_2X$ | $(Ar\text{-}D)_2X$ | $(Ar\text{-}D)_2X$ | $(Ar\text{-}D)_2X$ | $(Ar\text{-}D)_2X$ | $(Ar\text{-}D)_2X$ |
| | Content (% by mass) | | 40 | 40 | 30 | 30 | 27 | 27 | 30 | 40 | 40 |
| | Weight-Average Molecular Weight | | 195000 | 192000 | 140000 | 150000 | 190000 | 140000 | 140000 | 185000 | 110000 |
| | Structure | | - | - | - | - | $(Ar\text{-}D)_3X$ | $(Ar\text{-}D)_3X$ | - | - | - |
| | Content (% by mass) | | - | - | - | - | 5 | 5 | - | - | - |
| | Weight-Average Molecular Weight | | - | - | - | - | 270000 | 215000 | - | - | - |
| | Structure | | - | - | - | - | $(Ar\text{-}D)_4X$ | $(Ar\text{-}D)_4X$ | - | - | - |
| | Content (% by mass) | | - | - | - | - | 8 | 3 | - | - | - |
| | Weight-Average Molecular Weight | | - | - | - | - | 362700 | 275000 | - | - | - |
| Ratio of Weight-Average Molecular Weight | | | 2.0 | 2.0 | 2.0 | 2.0 | 2-3.9 | 2-3.9 | 2.0 | 2.0 | 2.0 |
| Hydrogenation ratio of Conjugated Diene Monomer Unit (% by mol) | | | 55 | 55 | 24 | 55 | 55 | 45 | 24 | 55 | 55 |

DMDMS: dimethoxydimethylsilane
TG: tetraglycidyl-1,3-bisaminomethylcyclohexane

31

<Example 1>

100 parts by mass of the block copolymer composition of Production Example 1, 140 parts by mass of Quintone R100 (manufactured by Zeon Corp.) as a tackifier, 30 parts by mass of Diana Process Oil NS-90S (manufactured by Idemitsu Kosan Co., Ltd.) as a softening agent, and 1 part by mass of 2-t-butyl-6-(3-t-butyl-2-hydroxy-5-methylbenzyl)-4-methylphenyl acrylate as a stabilizer were mixed, and melt kneaded at 180°C for 30 min by a pressurized double-arm kneader (type: D0.3-3, Moriyama Manufacturing Co., Ltd.) to thereby obtain a homogeneous hot melt-type adhesive composition.

Further, the obtained adhesive composition was cooled to room temperature, and dissolved in toluene. The obtained toluene solution was coated on a PET film (thickness: 50 $\mu$m) by an applicator, and thereafter held at room temperature for 30 min and in an oven of 70°C for 7 min to completely evaporate toluene to thereby fabricate a pressure-sensitive adhesive tape of 50 $\mu$m in tacky layer thickness.

Physical properties of the above-mentioned adhesive composition were measured ("Evaluation $\alpha$ of the adhesive composition" and "Quality evaluation of the adhesive composition") by using these adhesive composition and pressure-sensitive adhesive tape. These results are shown in Table 4.

<Examples 2 to 15, and Comparative Examples 1 to 5>

Adhesive compositions and pressure-sensitive adhesive tapes were fabricated, and evaluated for their physical properties, respectively, by carrying out the same operation as in Example 1, except for using the respective block copolymer compositions of Production Examples 2 to 6 and 12 to 20 and 7 to 11 in place of the block copolymer composition of Production Example 1. These results are shown in Table 4. Here, in the case where even if the kneading was carried out for 30 min, the torque did not become stabilized, the kneading was carried out until the torque became stabilized.

<Examples 16 to 18>

Adhesive compositions and pressure-sensitive adhesive tapes were fabricated, respectively, by carrying out the same operation as in Example 1, except for using 100 parts by mass of the respective polymer compositions obtained by mixing compositions of Polymer Blend Examples 1 to 3 described in Table 3 in place of 100 parts by mass of the block copolymer composition of Production Example 1. The evaluation results of the each obtained adhesive composition and pressure-sensitive adhesive tape are shown in Table 4.

[Table 3]

| | Polymer Blend Example | | | | | | | | | | | | | | | | | | | | | | | | |
|---|---|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 |
| Production Example 12 | 30 | 30 | 70 | | | | | | | | | | | | | | | | | | | | | | |
| Production Example 74 | | | | | | | | | | | | | | | | | | | | | | 85 | 70 | 30 | 60 |
| Production Example 15 | | | | 70 | 70 | 70 | 70 | 70 | 70 | 70 | 30 | 70 | 30 | 70 | 70 | 85 | 85 | 85 | 80 | 85 | 90 | | | | |
| (A1-1) | | | | 30 | | | | | | | | | 70 | | | | | | | | | | | | |
| (A1-2) | 70 | | | | 30 | | | | | | | | | 30 | | | | | | | | | | | |
| (A1-3) | | | | | | 30 | | | | | | | | | 30 | | | | | | | | | | |
| (A2-1) | | | | | | | 30 | | | | | | | | | 15 | | | | | | | | | |
| (A2-2) | | | | | | | | 30 | | | | | | | | | 15 | | | | | | | | |
| (A2-3) | | 70 | | | | | | | 30 | | | | | | | | | 15 | | | | | | | |
| (A3-1) | | | 30 | | | | | | | 30 | | | | | | | | | 20 | | | | | | |
| (A3-2) | | | | | | | | | | | 70 | | | | | | | | | 15 | | | | | |
| (A3-3) | | | | | | | | | | | | 30 | | | | | | | | | 10 | | | | |
| (A4-1) | | | | | | | | | | | | | | | | | | | | | 15 | | | | |
| (A5-1) | | | | | | | | | | | | | | | | | | | | | | | 30 | | |
| (A5-2) | | | | | | | | | | | | | | | | | | | | | | | | 70 | |
| (A5-3) | | | | | | | | | | | | | | | | | | | | | | | | | 40 |

* Numerical values in Table indicates the number of parts.  The respective components in Table are as follows.  All the following (A1) to (A5) do not meet the requirements for the component (A) and the component (B).

(A1) Non-hydrogenated styrene-isoprene-based block copolymers (hydrogenation ratio: 0%)

(A1-1) D1161 (manufactured by Krayton Polymers LLC)
SI/SIS, styrene content: 16% by mass, SI content: 20% by mass
(A1-2) Quintac 3520 (manufactured by Zeon Corp.)
SI/SIS, styrene content: 15% by mass, SI content: 78% by mass
(A1-3) Quintac 3460 (manufactured by Zeon Corp.)
SI/(SI)$_3$X, styrene content: 25% by mass, SI content: 30% by mass

* In the above formulae, "S" represents a styrene block; "I" represents an isoprene block; and "X" represents a coupling agent residue.
(A2) Hydrogenated styrene-butadiene-based block copolymers (hydrogenation ratio: 100%)

(A2-1) G1726 (manufactured by Krayton Polymers LLC)
SEB/SEBS, styrene content: 30% by mass, SEB content: 70% by mass
(A2-2) G1652 (manufactured by Krayton Polymers LLC)
SEBS, styrene content: 30% by mass, SEB content: 0%
(A2-3) G1657 (manufactured by Krayton Polymers LLC)
SEB/SEBS, styrene content: 13% by mass, SEB content: 30% by mass

* In the above formulae, "S" represents a styrene block; "E" represents an ethylene block; and "B" represents a butadiene block.
(A3) Hydrogenated styrene-isoprene-based block copolymers (hydrogenation ratio: 100%)

(A3-1) Septon 2063 (manufactured by Kuraray Co., Ltd.)
(A3-2) Septon 2007 (manufactured by Kuraray Co., Ltd.)
(A3-3) Septon 4033 (manufactured by Kuraray Co., Ltd.)

(A4) Styrene-butadiene-based random copolymer (hydrogenation ratio: 0%)

(A4-1) Asaprene 1205 (manufactured by Asahi Kasei Chemicals Corp.)
Styrene content: 25% by mass

(A5) Non-hydrogenated styrene-butadiene-based block copolymers (hydrogenation ratio: 0%)

(A5-1) Tafprene T438 (manufactured by Asahi Kasei Chemicals Corp.)
SB/SBS, styrene content: 35% by mass
(A5-2) Tafprene T439 (manufactured by Asahi Kasei Chemicals Corp.)
SB/SBS, styrene content: 40% by mass
(A5-3) Tafprene A (manufactured by Asahi Kasei Chemicals Corp.)
styrene content: 40% by mass

* In the above formulae, "S" represents a styrene block; and "B" represents a butadiene block.

Further, the pressure-sensitive adhesive tapes (25 mm in width) obtained in Examples 7, 17 and 18 were each pasted on a SUS plate, allowed to stand still in a gear oven of 60°C for 3 days, and then taken out. After the tape was allowed to stand still in a thermostatic chamber for one night, the tack strength after an accelerated heating test (180° peeling, peeling speed: 300 mm/min) was measured, and compared with the tack strength (Evaluation α). The tack strength after an accelerated heating test was higher than the tack strength (Evaluation α); and with respect to the degree of the variation, the pressure-sensitive adhesive tape obtained in Example 17 was lowest therein, and the pressure-sensitive adhesive tape obtained in Example 7 was highest therein. Hence, it was shown that the addition of the hydrogenated vinyl aromatic elastomer improved the tack strength stability.

[Table 4]

| Evaluation α, Quality Evaluation | Example | | | | | | | | | | | | | | | | | | Comparative Example | | | | |
|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 1 | 2 | 3 | 4 | 5 |
| Block Copolymer Composition (Production Example No.) | 1 | 2 | 3 | 4 | 5 | 6 | 12 | 13 | 14 | 15 | 16 | 17 | 18 | 19 | 20 | 12 | 12 | 12 | 7 | 8 | 9 | 10 | 11 |
| Polymer Blend Example | - | - | - | - | - | - | - | - | - | - | - | - | - | - | - | 1 | 2 | 3 | - | - | - | - | - |
| Melt Viscosity (Pa·s) | ○ | △ | ○ | ○ | ○ | △ | ○ | ○ | ○ | ○ | ○ | ○ | ○ | ○ | ○ | ○ | ○ | ○ | × | △ | × | × | × |
| Ball Tack (No.) | ○ | ○ | △ | △ | ○ | △ | △ | △ | △ | △ | △ | △ | △ | △ | △ | ○ | △ | △ | △ | × | △ | ○ | ○ |
| Tack Strength (N/10 mm) | ○ | ○ | △ | △ | △ | △ | ○ | ○ | ○ | ○ | ○ | ○ | ○ | △ | ○ | ○ | ○ | ○ | △ | × | ○ | △ | △ |
| Low Contamination Property | ○ | ○ | ○ | ○ | ○ | ○ | ○ | ○ | ○ | ○ | ○ | ○ | △ | ○ | ○ | ○ | ○ | ○ | △ | × | △ | ○ | ○ |
| Retentivity (min) | △ | ○ | ○ | ○ | △ | ○ | ○ | ○ | ○ | ○ | ◎ | ◎ | ○ | ○ | △ | ○ | ○ | ○ | ○ | × | △ | ○ | ○ |
| Color Fastness | ○ | ○ | △ | ○ | ○ | ○ | ○ | ○ | ○ | ○ | ○ | ○ | ○ | ○ | ○ | ○ | ○ | ○ | ○ | ○ | ○ | ○ | ○ |

<Examples 19 to 21 and Comparative Example 6>

Adhesive compositions and pressure-sensitive adhesive tapes were fabricated, respectively, by carrying out the same operation as in Example 1, except for using the respective block copolymer compositions of Production Examples 12, 15, 17 and 9 in place of the block copolymer composition of Production Example 1, blending, based on 100 parts by mass of the block copolymer composition was 200 parts by mass of Quintone R100 (manufactured by Zeon Corp.) as a tackifier and 100 parts by mass of Diana Process Oil PW-90 (manufactured by Idemitsu Kosan Co., Ltd.) as a softening agent, and fabricating the pressure-sensitive adhesive tape having a tacky layer of 25 μm in thickness on a PET film of 38 μm. Properties of each of the obtained adhesive composition and pressure-sensitive adhesive tape were evaluated by the above-mentioned methods ("Evaluation β of the adhesive composition" and "Quality evaluation of the adhesive composition"), and their results are shown in Table 5.

<Example 22>

An adhesive composition and a pressure-sensitive adhesive tape were fabricated, respectively, by carrying out the same operation as in Example 20, except for using Arkon M100 (Arakawa Chemical Industries, Ltd.) in place of the tackifier Quintone R100 of Example 20. The evaluation results of the obtained adhesive composition and pressure-sensitive adhesive tape are shown in Table 5.

<Examples 23 to 31>

Adhesive compositions and pressure-sensitive adhesive tapes were fabricated, respectively, by carrying out the same operation as in Example 19, except for using 100 parts by mass of the respective polymer compositions of Polymer Blend Examples 4 to 12 in place of 100 parts by mass of the block copolymer composition of Production Example 12. The evaluation results of the each obtained adhesive composition and pressure-sensitive adhesive tape are shown in Table 5.

Further, the adhesive compositions obtained in Examples 20 and 23 to 25 were each allowed to stand still in a thermostatic chamber for one night, and checked for the hardness by finger; the adhesive composition obtained in Example 24 was softest, and the adhesive compositions obtained in Examples 23, 25 and 20 were softer in this order. It was found that the adhesive compositions having flexibility while holding the balance in the viscous adhesive performance could be obtained.

Further, the pressure-sensitive adhesive tapes (25 mm in width) obtained in Examples 20 and 26 to 31 were each pasted on a SUSD plate, and allowed to stand still in a glass case outdoor for one month to be thereby subjected to a sunlight exposure test. The tape was allowed to stand still in a thermostatic chamber for one night, and the tack strength after sunlight exposure (180° peeling, peeling speed: 300 mm/min) was measured, and compared with the tack strength (Evaluation β); the pressure-sensitive adhesive tapes obtained in Examples 26 to 31 exhibited smaller variations in the tack strength than the pressure-sensitive adhesive tape obtained in Example 20. It was shown that the addition of the hydrogenated vinyl aromatic elastomer improved the weather resistance while holding good viscous adhesive performance.

[Table 5]

| Evaluation β, Quality Evaluation | Example | | | | | | | | | | | | | Comparative Example |
|---|---|---|---|---|---|---|---|---|---|---|---|---|---|---|
| | 19 | 20 | 21 | 22 | 23 | 24 | 25 | 26 | 27 | 28 | 29 | 30 | 31 | 6 |
| Block Copolymer Composition (Production Example No.) | 12 | 15 | 17 | 15 | 15 | 15 | 15 | 15 | 15 | 15 | 15 | 15 | 15 | 9 |
| Polymer Blend Example | - | - | - | - | 4 | 5 | 6 | 7 | 8 | 9 | 10 | 11 | 12 | - |
| Melt Viscosity (Pa·s) | Δ | ◎ | ◎ | ◎ | ○ | ◎ | ○ | ○ | Δ | ○ | ◎ | ○ | Δ | × |
| Ball Tack (No.) | ○ | ○ | ○ | Δ | ○ | ○ | Δ | Δ | Δ | ○ | ○ | Δ | Δ | Δ |

(continued)

| Evaluation β, Quality Evaluation | Example | | | | | | | | | | | | | Comparative Example |
|---|---|---|---|---|---|---|---|---|---|---|---|---|---|---|
| | 19 | 20 | 21 | 22 | 23 | 24 | 25 | 26 | 27 | 28 | 29 | 30 | 31 | 6 |
| Loop Tack | Δ | ○ | ○ | Δ | ○ | ○ | ○ | Δ | Δ | Δ | Δ | Δ | Δ | Δ |
| Tack Strength (N/10 mm) | Δ | ○ | ○ | ○ | ○ | ○ | ○ | Δ | Δ | Δ | Δ | Δ | Δ | Δ |
| Low Contamination Property | ○ | ○ | ○ | ○ | ○ | Δ | ○ | ○ | ○ | ○ | ○ | ○ | ○ | Δ |
| Retentivity (min) | Δ | Δ | ◎ | ○ | Δ | Δ | ○ | ○ | ○ | Δ | Δ | ○ | ○ | ○ |
| Color Fastness | ○ | ○ | Δ | ○ | ○ | ○ | ○ | ○ | ○ | ○ | ○ | ○ | ○ | ○ |

<Examples 32 to 36 and Comparative Example 7>

Adhesive compositions and pressure-sensitive adhesive tapes were fabricated, respectively, by carrying out the same operation as in Example 1, except for using the respective block copolymer compositions of Production Examples 9, 12, 13, 14, 15 and 17 in place of the block copolymer composition of Production Example 1, and blending, based on 100 parts by mass of the block copolymer composition was 300 parts by mass of Arkon M100 as a tackifier and 100 parts by mass of Diana Process Oil PW-90 as a softening agent. Properties of each of the obtained adhesive composition and pressure-sensitive adhesive tape were evaluated by the above-mentioned methods ("Evaluation γ of the adhesive composition" and "Quality evaluation of the adhesive composition"), and their results are shown in Table 6.
The retentivity of Example 34 was 530 min, and the retentivity of Example 35 exceeded 800 min. It was shown that the adhesive composition having a polar group introduced therein exhibited good adhesion to adherends having a high surface SP value.

<Examples 37 to 49>

Adhesive compositions and pressure-sensitive adhesive tapes were fabricated, respectively, by carrying out the same operation as in Example 32, except for using 100 parts by mass of the respective polymer compositions of Polymer Blend Examples 13 to 25 in place of 100 parts by mass of the block copolymer composition of Example 32. The evaluation results of the each obtained adhesive composition and pressure-sensitive adhesive tape are shown in Table 6.
Further, the adhesive compositions obtained in Examples 34 and 39 to 45 were each put in a metal can, and allowed to stand still at 180°C for 2 days after the lid was put. The adhesive compositions of Examples 39 to 45 exhibited smaller variations in melt viscosity before and after the heating. It was shown that the addition of the hydrogenated vinyl aromatic elastomer could improve the thermal stability of the adhesive composition.
Further, when after the adhesive compositions obtained in Examples 33 and 46 were each molded into a plate of 2 cm in thickness, and allowed to stand still in a thermostatic chamber for one night, an attempt to cut the molded adhesive composition by scissors was made, the adhesive composition of Example 46 could be cut. It was shown that the addition of the conjugated diene rubber made the cutting property good.

[Table 6]

| Evaluation γ, Quality Evaluation | Example | | | | | | | | | | | | | | | | | | | Comparative Example |
|---|---|---|---|---|---|---|---|---|---|---|---|---|---|---|---|---|---|---|---|---|
| | 32 | 33 | 34 | 35 | 36 | 37 | 38 | 39 | 40 | 41 | 42 | 43 | 44 | 45 | 46 | 47 | 48 | 49 | 7 |
| Block Copolymer Composition (Production Example No.) | 12 | 14 | 15 | 17 | 13 | 15 | 15 | 15 | 15 | 15 | 15 | 15 | 15 | 15 | 14 | 14 | 14 | 14 | 9 |
| Polymer Blend Example | - | - | - | - | - | 13 | 14 | 15 | 16 | 17 | 18 | 19 | 20 | 21 | 22 | 23 | 24 | 25 | - |
| Melt Viscosity (Pa·s) | ○ | ◎ | ◎ | ◎ | ○ | ○ | ○ | ○ | ○ | Δ | ○ | ◎ | ○ | Δ | ◎ | ◎ | ◎ | Δ | × |
| Loop Tack | Δ | Δ | Δ | Δ | Δ | ○ | ○ | Δ | Δ | Δ | Δ | Δ | Δ | Δ | Δ | Δ | ○ | Δ | × |
| Tack Strength (N/10 mm) | ○ | Δ | Δ | Δ | ○ | Δ | Δ | Δ | Δ | Δ | Δ | Δ | Δ | Δ | Δ | Δ | Δ | ○ | Δ |
| Low Contamination Property | ○ | ○ | ○ | ○ | Δ | ○ | ○ | ○ | ○ | ○ | ○ | ○ | ○ | ○ | ○ | ○ | ○ | ○ | × |
| Retentivity (min) | Δ | Δ | ◎ | ◎ | Δ | Δ | Δ | ○ | ○ | ◎ | Δ | Δ | ◎ | ◎ | Δ | ○ | ○ | ◎ | ◎ |
| Color Fastness | ○ | ○ | ○ | Δ | ○ | ○ | ○ | ○ | ○ | ○ | ○ | ○ | ○ | ○ | Δ | Δ | Δ | Δ | ○ |

EP 3 098 264 B1

Industrial Applicability

The adhesive composition according to the present invention can be utilized for various types of pressure-sensitive adhesive tapes, pressure-sensitive adhesive sheets, pressure-sensitive adhesive films, pressure-sensitive adhesive labels, pressure-sensitive thin plates, pressure-sensitive sheets, surface protection sheets, surface protection films, sanitary materials, backsizes for fixing various types of light-weight plastic molds, backsizes for fixing carpets, backsizes for fixing tiles, adhesives and the like, and has the industrial applicability as a viscous adhesive particularly for pressure-sensitive adhesive tapes, pressure-sensitive adhesive sheets, pressure-sensitive adhesive films, pressure-sensitive adhesive labels, surface protection sheets, surface protection films, and sanitary materials.

**Claims**

1. A block copolymer composition, comprising 20% by mass or more and 90% by mass or less of a component (A) and 10% by mass or more and 80% by mass or less of a component (B),
   wherein the component (A) is a block copolymer having a polymer block (Ar) mainly comprising a vinyl aromatic monomer unit and a polymer block (D) mainly comprising a conjugated diene monomer unit, and having a weight-average molecular weight of 30,000 or higher and 190,000 or lower; and
   the component (B) is a block copolymer having a polymer block (Ar) mainly comprising a vinyl aromatic monomer unit and a polymer block (D) mainly comprising a conjugated diene monomer unit, and having a weight-average molecular weight of 60,000 or higher and 500,000 or lower,
   wherein a hydrogenation ratio of the conjugated diene monomer units in the component (A) and the component (B) is 10 to 80% by mol;
   a ratio of a weight-average molecular weight of the component (B) to a weight-average molecular weight of the component (A) is 1.3 to 10; and
   wherein the content of the vinyl aromatic monomer units is 5% by mass or higher and lower than 35% by mass based on 100% by mass of the component (A) and the component (B).

2. The block copolymer composition according to claim 1, wherein a vinyl bond content of the conjugated diene monomer units in the component (A) and the component (B) before hydrogenation is 5% by mol or larger and smaller than 30% by mol based on a total amount of the conjugated diene monomer units in the component (A) and the component (B).

3. The block copolymer composition according to claim 1 or 2, wherein the component (B) comprises a block copolymer having at least two of the polymer block (Ar) and at least one of the polymer block (D).

4. The block copolymer composition according to any one of claims 1 to 3, wherein the weight-average molecular weight of the component (B) is 100,000 or higher and 500,000 or lower.

5. The block copolymer composition according to any one of claims 1 to 4, wherein the component (B) comprises a block copolymer(s) represented by formulae Ar-D-Ar, (Ar-D)$_2$X, D-Ar-D-Ar and/or (D-Ar-D)$_2$X (wherein X represents a residue of a coupling agent or a residue of a polymerization initiator).

6. The block copolymer composition according to any one of claims 1 to 4, wherein the component (B) comprises a three-branched block copolymer(s) represented by formulae (D-Ar-D)$_3$-X and/or (Ar-D)$_3$-X (wherein X represents a residue of a coupling agent or a residue of a polymerization initiator).

7. The block copolymer composition according to any one of claims 1 to 4, wherein the component (B) comprises a four-branched block copolymer(s) represented by formulae (D-Ar-D)$_4$-X and/or (Ar-D)$_4$-X (wherein X represents a residue of a coupling agent or a residue of a polymerization initiator).

8. The block copolymer composition according to any one of claims 5 to 7, wherein the coupling agent comprises a halogen-free coupling agent.

9. The block copolymer composition according to any one of claims 1 to 8, wherein the content of the vinyl aromatic monomer units is 5% by mass or higher and lower than 30% by mass based on 100% by mass of the component (A) and the component (B).

10. The block copolymer composition according to any one of claims 1 to 9, wherein the content of the vinyl aromatic monomer units is 5% by mass or higher and lower than 20% by mass based on 100% by mass of the component (A) and the component (B).

11. An adhesive composition, comprising:

   100 parts by mass of a block copolymer composition according to any one of claims 1 to 10;
   1 to 600 parts by mass of a tackifier; and
   0 to 200 parts by mass of a softening agent.

12. The adhesive composition according to claim 11, wherein a content of the tackifier is 50 to 400 parts by mass.

13. The adhesive composition according to claim 11 or 12, further comprising a vinyl aromatic elastomer.

14. The adhesive composition according to any one of claims 11 to 13, further comprising a conjugated diene rubber.

15. The adhesive composition according to any one of claims 11 to 14, further comprising a natural rubber.


**Patentansprüche**

1. Blockcopolymerzusammensetzung, umfassend 20 Massen-% oder mehr und 90 Massen-% oder weniger einer Komponente (A) und 10 Massen-% oder mehr und 80 Massen-% oder weniger einer Komponente (B),
   wobei die Komponente (A) ein Blockcopolymer ist, das einen Polymerblock (Ar), der hauptsächlich eine vinylaromatische Monomereinheit umfasst, und einen Polymerblock (D), der hauptsächlich eine konjugierte Dienmonomereinheit umfasst, aufweist und ein Gewichtsmittel des Molekulargewichts von 30000 oder höher und 190000 oder niedriger aufweist; und
   die Komponente (B) ein Blockcopolymer ist, das einen Polymerblock (Ar), der hauptsächlich eine vinylaromatische Monomereinheit umfasst, und einen Polymerblock (D), der hauptsächlich eine konjugierte Dienmonomereinheit umfasst, aufweist und ein Gewichtsmittel des Molekulargewichts von 60000 oder höher und 500000 oder niedriger aufweist,
   wobei der Hydrierungsgrad der konjugierten Dienmonomereinheiten in der Komponente (A) und der Komponente (B) 10 bis 80 Mol-% ist;
   das Verhältnis des Gewichtsmittels des Molekulargewichts der Komponente (B) zum Gewichtsmittel des Molekulargewichts der Komponente (A) 1,3 bis 10 ist; und
   wobei der Gehalt der vinylaromatischen Monomereinheiten 5 Massen-% oder höher und niedriger als 35 Massen-% ist, bezogen auf 100 Massen-% der Komponente (A) und der Komponente (B).

2. Blockcopolymerzusammensetzung nach Anspruch 1, wobei der Vinylbindungsgehalt der konjugierten Dienmonomereinheiten in der Komponente (A) und der Komponente (B) vor Hydrierung 5 Mol-% oder größer und kleiner als 30 Mol-% ist, bezogen auf die Gesamtmenge der konjugierten Dienmonomereinheiten in der Komponente (A) und der Komponente (B).

3. Blockcopolymerzusammensetzung nach Anspruch 1 oder 2, wobei die Komponente (B) ein Blockcopolymer mit mindestens zweien des Polymerblocks (Ar) und mindestens einem des Polymerblocks (D) umfasst.

4. Blockcopolymerzusammensetzung nach einem der Ansprüche 1 bis 3, wobei das Gewichtsmittel des Molekulargewichts der Komponente (B) 100000 oder höher und 500000 oder niedriger ist.

5. Blockcopolymerzusammensetzung nach einem der Ansprüche 1 bis 4, wobei die Komponente (B) (ein) Blockcopolymer(e) der Formeln Ar-D-Ar, $(Ar-D)_2X$, D-Ar-D-Ar und/oder $(D-Ar-D)_2X$ umfasst (worin X einen Rest eines Kupplungsmittels oder einen Rest eines Polymerisationsinitiators darstellt).

6. Blockcopolymerzusammensetzung nach einem der Ansprüche 1 bis 4, wobei die Komponente (B) (ein) dreizweigiges Blockcopolymer(e) der Formeln $(D-Ar-D)_3$-X und/oder $(Ar-D)_3$-X umfasst (worin X einen Rest eines Kupplungsmittels oder einen Rest eines Polymerisationsinitiators darstellt).

7. Blockcopolymerzusammensetzung nach einem der Ansprüche 1 bis 4, wobei die Komponente (B) (ein) vierzweigiges Blockcopolymer(e) der Formeln (D-Ar-D)$_4$-X und/oder (Ar-D)$_4$-X umfasst (worin X einen Rest eines Kupplungsmittels oder einen Rest eines Polymerisationsinitiators darstellt).

8. Blockcopolymerzusammensetzung nach einem der Ansprüche 5 bis 7, wobei das Kupplungsmittel ein halogenfreies Kupplungsmittel umfasst.

9. Blockcopolymerzusammensetzung nach einem der Ansprüche 1 bis 8, wobei der Gehalt der vinylaromatischen Monomereinheiten 5 Massen-% oder höher und niedriger als 30 Massen-% ist, bezogen auf 100 Massen-% der Komponente (A) und der Komponente (B).

10. Blockcopolymerzusammensetzung nach einem der Ansprüche 1 bis 9, wobei der Gehalt der vinylaromatischen Monomereinheiten 5 Massen-% oder höher und niedriger als 20 Massen-% ist, bezogen auf 100 Massen-% der Komponente (A) und der Komponente (B).

11. Klebezusammensetzung, umfassend:

   100 Massenteile einer Blockcopolymerzusammensetzung nach einem der Ansprüche 1 bis 10;
   1 bis 600 Massenteile eines Stoffs zur Erhöhung der Klebrigkeit; und
   0 bis 200 Massenteile eines Weichmachers.

12. Klebezusammensetzung nach Anspruch 11, wobei der Gehalt des Stoffs zur Erhöhung der Klebrigkeit 50 bis 400 Massenteile beträgt.

13. Klebezusammensetzung nach Anspruch 11, welche weiterhin ein vinylaromatisches Elastomer enthält.

14. Klebezusammensetzung nach einem der Ansprüche 11 bis 13, welche weiterhin einen konjugierten Dienkautschuk enthält.

15. Klebezusammensetzung nach einem der Ansprüche 11 bis 14, welche weiterhin einen Naturkautschuk enthält.

**Revendications**

1. Composition de copolymères séquencés, comprenant 20 % en masse ou plus et 90 % en masse ou moins d'un composant (A) et 10 % en masse ou plus et 80 % ou moins d'un composant (B),
   dans laquelle le composant (A) est un copolymère séquencé contenant une séquence polymère (Ar) comprenant principalement un motif monomère aromatique vinylique et une séquence polymère (D) comprenant principalement un motif monomère diénique conjugué, et présentant un poids moléculaire moyen en poids de 30 000 ou plus et de 190 000 ou moins ; et
   le composant (B) est un copolymère séquencé contenant une séquence polymère (Ar) comprenant principalement un motif monomère aromatique vinylique et une séquence polymère (D) comprenant principalement un motif monomère diénique conjugué, et présentant un poids moléculaire moyen en poids de 60 000 ou plus et de 500 000 ou moins,
   dans laquelle un taux d'hydrogénation des motifs monomères diéniques conjugués dans le composant (A) et le composant (B) est de 10 à 80 % en mole ;
   le rapport entre un poids moléculaire moyen en poids du composant (B) et un poids moléculaire moyen en poids du composant (A) est de 1,3 à 10 ; et
   dans laquelle la teneur des motifs monomères aromatiques vinyliques est de 5 % en masse ou plus et inférieure à 35 % en masse sur la base de 100 % en masse du composant (A) et du composant (B).

2. Composition de copolymères séquencés selon la revendication 1, dans laquelle la teneur en liaison vinylique des motifs monomères diéniques conjugués dans le composant (A) et le composant (B) avant hydrogénation est de 5 % en mole ou plus et inférieure à 30 % en mole sur la base d'une quantité totale des motifs monomères diéniques conjugués dans le composant (A) et le composant (B).

3. Composition de copolymères séquencés selon la revendication 1 ou 2, dans laquelle le composant (B) comprend un copolymère séquencé contenant au moins deux de la séquence polymère (Ar) et au moins une de la séquence polymère (D).

4. Composition de copolymères séquencés selon l'une quelconque des revendications 1 à 3, dans laquelle le poids moléculaire moyen en poids du composant (B) est de 100 000 ou plus et de 500 000 ou moins.

5. Composition de copolymères séquencés selon l'une quelconque des revendications 1 à 4, dans laquelle le composant (B) comprend un ou plusieurs copolymères séquencés représentés par les formules Ar-D-Ar, $(Ar-D)_2X$, D-Ar-D-Ar et/ou $(D-Ar-D)_2X$ (dans lesquelles X représente un résidu d'un agent de couplage ou un résidu d'un initiateur de polymérisation).

6. Composition de copolymères séquencés selon l'une quelconque des revendications 1 à 4, dans laquelle le composant (B) comprend un ou plusieurs copolymères séquencés tri-ramifiés représentés par les formules $(D-Ar-D)_3$-X et/ou $(Ar-D)_3$-X (dans lesquelles X représente un résidu d'un agent de couplage ou un résidu d'un initiateur de polymérisation).

7. Composition de copolymères séquencés selon l'une quelconque des revendications 1 à 4, dans laquelle le composant (B) comprend un ou plusieurs copolymères séquencés tétra-ramifiés représentés par les formules $(D-Ar-D)_4$-X et/ou $(Ar-D)_4$-X (dans lesquelles X représente un résidu d'un agent de couplage ou un résidu d'un initiateur de polymérisation).

8. Composition de copolymères séquencés selon l'une quelconque des revendications 5 à 7, dans laquelle l'agent de couplage comprend un agent de couplage sans halogène.

9. Composition de copolymères séquencés selon l'une quelconque des revendications 1 à 8, dans laquelle la teneur des motifs monomères aromatiques vinyliques est de 5 % en masse ou plus et inférieure à 30 % en masse sur la base de 100 % en masse du composant (A) et du composant (B).

10. Composition de copolymères séquencés selon l'une quelconque des revendications 1 à 9, dans laquelle la teneur des motifs monomères aromatiques vinyliques est de 5 % en masse ou plus et inférieure à 20 % en masse sur la base de 100 % en masse du composant (A) et du composant (B).

11. Composition d'adhésif, comprenant :

    100 parties en masse d'une composition de copolymères séquencés selon l'une quelconque des revendications 1 à 10 ;
    1 à 600 parties en masse d'un agent poisseux ; et
    0 à 200 parties en masse d'un plastifiant.

12. Composition d'adhésif selon la revendication 11, dans laquelle une teneur de l'agent poisseux est de 50 à 400 parties en masse.

13. Composition d'adhésif selon la revendication 11 ou 12, comprenant en outre un élastomère aromatique vinylique.

14. Composition d'adhésif selon l'une quelconque des revendications 11 à 13, comprenant en outre un caoutchouc de diène conjugué.

15. Composition d'adhésif selon l'une quelconque des revendications 11 à 14, comprenant en outre un caoutchouc naturel.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S61278578 B
- JP S63248817 B
- JP H0598130 B
- JP S3619286 B
- JP S4317979 B
- JP S4632415 A
- JP S4936957 A
- JP S482423 A
- JP S484106 A

- JP S5628925 A
- JP S59166518 B
- JP S60186577 A
- JP S428704 B
- JP S436636 B
- JP S634841 B
- JP S635401 B
- JP 59133203 A